(19) Europäisches Patentamt
European Patent Office
Office européen des brevets

(11) EP 1 193 303 B1

(12) # EUROPÄISCHE PATENTSCHRIFT

(45) Veröffentlichungstag und Bekanntmachung des Hinweises auf die Patenterteilung:
**09.03.2005 Patentblatt 2005/10**

(51) Int Cl.[7]: **C09D 201/00**, C08G 77/42, C08G 77/442, C08G 77/445, C08G 77/458, C09D 183/04

(21) Anmeldenummer: **01121699.1**

(22) Anmeldetag: **17.09.2001**

(54) **Beschichtungsmittel und polymere Formmassen mit anti-adhäsiven, schmutzabweisenden Eigenschaften**

Coating composition and polymeric molding materials having anti-adhesive, soil-release properties

Compositions de revêtement et matières à mouler ayant des propriétés antiadhésives et antisalissures

(84) Benannte Vertragsstaaten:
**AT BE CH CY DE DK ES FI FR GB GR IE IT LI LU MC NL PT SE TR**

(30) Priorität: **29.09.2000 DE 10048259**

(43) Veröffentlichungstag der Anmeldung:
**03.04.2002 Patentblatt 2002/14**

(73) Patentinhaber: **Byk-Chemie GmbH**
**46483 Wesel (DE)**

(72) Erfinder:
- **Haubennestel, Karlheinz**
  **46487 Wesel (DE)**
- **Bubat, Alfred**
  **46487 Wesel-Bislich (DE)**
- **Frank, Albert**
  **46509 Xanten (DE)**
- **Woocker, Axel**
  **46459 Rees (DE)**
- **Krappe, Udo, Dr.**
  **46446 Emmerich (DE)**

(74) Vertreter: **Leifert, Elmar, Dr.**
**Leifert & Steffan**
**Burgplatz 21-22**
**40213 Düsseldorf (DE)**

(56) Entgegenhaltungen:
**EP-A- 0 284 679**
**US-A- 4 812 518**
**US-A- 5 079 298**
**US-A- 5 731 379**
**US-A- 6 001 947**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Beschichtungsmittel und polymere Formmassen mit anti-adhäsiven, schmutzabweisenden Eigenschaften sowie die Verwendung von verzweigten Polymeren als Additiv in Beschichtungsmitteln und polymeren Formmassen.

Es ist bekannt, Beschichtungen und polymeren Formmassen Polysiloxane zuzusetzen, um bestimmte Eigenschaften zu erzielen, z. B. eine verbesserte Kratzbeständigkeit bei Möbel- und Automobillacken oder von anti-adhäsive Eigenschaften bei Papierbeschichtungen. Der Einsatz der Polysiloxane ist weit gestreut und sehr vielschichtig.

In der DE-A-35 35 283 werden Polyestergruppen-haltige Polysiloxane für Lacke und Formmassen beschrieben, in denen das Polysiloxan eine anti-adhäsive Eigenschaft der Lacke oder Formmassen vermittelt. Zur Erzielung eines ausreichenden Effektes ist aber eine sehr hohe Einsatzkonzentration nötig, so daß andere Lackeigenschaf ten negativ beeinflußt werden können.

In der EP-A-0 835 897 werden Siliconpoly(meth)acrylate, hergestellt aus Alkoxysiloxanen und hydroxyfunktionellen Poly(meth)acrylaten, beschrieben, die Beschichtungsmitteln als Additive zugesetzt werden können. Der Nachteil dieser Verbindungen ist jedoch die Verknüpfung der Polymersegmente über eine nicht hydrolysebeständige Si-O-C-Bindung, so daß die anti-adhäsive Wirkung der Beschichtungsmittel nicht über einen längeren Zeitraum erhalten bleibt.

In der JP-11189701 wird eine aus zwei Komponenten bestehende härtbare Zusammensezung beschrieben, die anti-adhäsive Eigenschaften besitzt Die in diesem Dokument offenbarte Zusammensetzung enthält neben einem Vernetzer ein verzweigtes Poymer, welches aus einem Basismolekül besteht, an das Polydimethylsiloxanseitenketten über eine Si-C-Bindung gebunden sind. Der Nachteil dieser Zusammensetzung besteht allerdings darin, daß das verzweigte Polymer als alleinige Bindemittelkomponente eingesetzt wird, welche über OH-Gruppen mit den Vernetzem reagiert. Die Verwendung derartiger verzweigter Polymere stellt daher keine universelle Verbesserung der anti-adhäsiven Eigenschaften von anderen als den in diesem Dokument beschriebenen Zusammensetzungen dar.

Die Aufgabe der vorliegenden Erfindung bestand demnach in der Bereitstellung von anti-adhäsiven, schmutzabweisenden Beschichtungsmitteln sowie anti-adhäsiven, schmutzabweisenden polymeren Formmassen, welche die anti-adhäsive, schmutzabweisende Wirkung durch ein in geringer Menge zugesetztes Additiv, welches die anderen Eigenschaften der Beschichtungsmittel bzw. der polymeren Formmassen nicht beeinträchtigt, erhalten. Die erfindungsgemäßen Beschichtungsmittel und polymeren Formmassen sollen ihre anti-adhäsive, schmutzabweisende Wirkung über einen langen Zeitraum von z. B. mehreren Jahren auch bei Außenbewitterung nahezu beibehalten. Dies beinhaltet auch die Permanenz des anti-adhäsiven Effektes über mehrere Reinigungszyklen hinweg.

Überraschenderweise hat sich gezeigt, daß diese Aufgabe gelöst werden kann, in dem Beschichtungsmitteln oder polymeren Formmassen als Additiv ein verzweigtes Polymer zugesetzt wird, das aus einem polymeren Basismolekül und kovalent an das Basismolekül gebundenen Polydiorganosiloxanseitenketten besteht. Besonders überraschend ist es, daß Beschichtungsmittel und polymere Formmassen, deren Bindemittelkomponente bzw. deren Polymer ausschließlich auf der Basis von derartigen Polydiorganosiloxanseitenketten enthaltenden verzweigten Polymeren aufgebaut ist, durchweg schlechter in den physikalischen Eigenschaften sind als normale Beschichtungsmittel und polymere Formmassen, welche diese verzweigten Polymere lediglich als Additive in äußerst geringer Konzentration enthalten. Dies ermöglicht die Verwendung von bewährten und über lange Jahre geprüfte Beschichtungsmitteln und polymeren Formmassen. Die physikalischen Eigenschaften der ursprünglichen Beschichtungsmittel und polymeren Formmassen z. B. in Bezug auf Korrosionsschutz, Glanzhaltung und Witterungsbeständigkeit werden durch die geringen Konzentrationen des Additives nicht negativ beeinflußt.

Die vorliegende Erfindung betrifft Beschichtungsmittel mit anti-adhäsiven, schmutzabweisenden Eigenschaften, denen als Additiv 0,1 bis 10 Gew.-% bezogen auf den Feststoffgehalt des Beschichtungsmittels eines verzweigten Polymers zugesetzt wird, welches ein Gewichtsmittel des Molekulargewichts von 2.000 bis 200.000 besitzt und aus einem polymeren Basismolekül sowie über Si-C-Bindungen kovalent an das Basismolekül gebundenen Polydiorganosiloxanseitenketten, die ein Gewichtsmittel des Molekulargewichts zwischen 1.000 und 30.000 aufweisen und deren Anteil am Gesamtgewicht des verzweigten Polymers 5 bis 25 Gew.-% beträgt, besteht. Die vorliegende Erfindung betrifft des Weiteren polymere Formmassen mit anti-adhäsiven, schmutzabweisenden Eigenschaften, denen dieses verzweigte Polymer als Additiv in einer Menge von 0,1 bis 10 Gew.-% bezogen auf das Gesamtgewicht der polymeren Formmassen zugesetzt wird. Die Erfindung betrifft auch die Verwendung der verzweigten Polymere als Additiv für Beschichtungsmittel und polymere Formmassen.

Die Erfindung betrifft auch die Verwendung der zuvor genannten verzweigten Polymere als Additiv für Beschichtungsmittel und polymere Formmassen.

Das polymere Basismolekül des verzweigten Polymers, das den erfindungsgemäßen Beschichtungsmitteln und polymeren Formmassen als Additiv zugesetzt wird, ist bevorzugt ein Polymer aus radikalischer Polymerisation, ein Polykondensat oder ein Polyaddukt und kann als Copolymer auch aus strukturell verschiedenen monomeren Einheiter aufgebaut sein.

Wenn das polymere Basismolekül ein Polymer aus radikalischer Polymerisation ist, dann können als monomere Einheiten des Basismolekül alle radikalisch polymerisierbaren, ethylenisch ungesättigten Verbindungen verwendet werden. Bevorzugt sind dies Verbindungen, die eine (Meth)acryl-, eine Styryl-, eine Allyl-, eine Vinylbenzyl-, eine Vinylether-, eine Vinylester- oder eine Vinylketongruppe aufweisen.

Besonders bevorzugte monomere Einheiten des Basismoleküls bei radikalischer Polymerisation sind ausgewählt aus der Gruppe bestehend aus Alkenen und Arylalkenen mit 2 bis 30 C-Atomen, Alkylacrylaten und Alkylmethacrylaten von geradkettigen, verzweigten oder cycloaliphatischen Alkoholen mit 1 bis 22 C-Atomen, Aralkylacrylaten und Aralkylmethacrylaten von Aralkylalkoholen mit 8 bis 18 C-Atomen, Acrylsäureamiden und Methacrylsäureamiden von geradkettigen, verzweigten oder cycloaliphatischen Aminen mit 1 bis 22 C-Atomen, Aminoalkylacrylaten und Aminoalkylmethacrylaten von geradkettigen, verzweigten oder cycloaliphatischen Aminoalkoholen mit 2 bis 8 C-Atomen, Maleinsäureestern, ltaconsäureestem und Fumarsäureestern von geradkettigen, verzweigten oder cycloaliphatischen Alkoholen mit 1 bis 22 C-Atomen, Vinylestern, Vinylethern und Vinylketonen mit 3 bis 20 C-Atomen, Vinyltrialkoxysilanen mit 5 bis 8 C-Atomen, und Methacryloxypropyltrialkoxysilanen mit 10 bis 16 C-Atomen.

Wenn das polymere Basismolekül ein Polykondensat ist, so können als monomere Einheiten des Basismoleküls alle Verbindungen verwendet werden, die zu einem Polymer kondensiert werden können. Bevorzugt können hierzu als Alkoholkomponenten Ethylenglykol, Propylenglykol, Dipropylenglykol, 1,4-Butandiol, 1,6-Hexandiol, 2-Ethylhexan-1,3-diol, Neopentylglykol, Glycerin, Trimethylolpropan, Pentaerythrit und Dipentaerythrit verwendet werden. Bevorzugt können hierzu als Säurekomponenten Phthalsäure, Phthalsäureanhydrid, Isophthalsäure, Terephthalsäure, Tetrahydrophthalsäure, Tetrahydrophthalsäureanhydrid, Adipinsäure, Sebacinsäure, Maleinsäure, Maleinsäureanhydrid, Fumarsäure, Trimellitsäure, Trimellitsäureanhydrid, Pyromellitsäure und Pyromellitsäuredianhydrid verwendet werden. Weiterhin bevorzugt sind Caprolacton und Valerolacton und deren Derivate, sowie β-Propiolacton und Dodecalacton.

Wenn das polymere Basismolekül ein Polyaddukt ist, so können als monomere Einheiten des Basismoleküls alle Verbindungen verwendet werden, die durch Polyaddition miteinander verknüpft werden können. Als Polyaddukte werden bevorzugt Polyaddukte aus Diolen mit 2 bis 80 C-Atomen und Diisocyanate, Triisocyanate oder Polyisocyanate verwendet. Alle konventionellen aromatischen, aliphatischen, cycloaliphatischen di-, tri- und polyfunktionellen Isocyanate können verwendet werden. Bevorzugt verwendete Diisocyanate sind 1,6-Hexamethylendiisocyanat, Isophorondiisocyanat, 4,4'-Biphenylendiisocyanat, Toluylendiisocyanat, 4,4'-Methylendicyclohexyldiisocyanat, 1,4-Diisocyanato-butan, Diphenylmethandiisocyanat usw.. Bevorzugt verwendete Triisocyanate sind Triphenylmethantriisocyanat, 2,4,5-Toluoltriisocyanat, sowie die Trimere von Diisocyanaten z.B. von 1,6-Hexamethylendiisocyanat und Isophorondiisocyanat. Polyisocyanate wie z.B. Polymethylen-polyphenylisocyanat (PAPI) und Isocyanurate (z.B. die Trimere bzw. Polymere von Hexamethylendiisocyanat und Isophorondiisocyanat) können auch verwendet werden.

Als monomere Einheiten des Basismoleküls können auch Polyethylenglykol-haltige monomere Einheiten verwendet werden, um eine Wasserlöslichkeit bzw. Wasseremulgierbarkeit der erfindungsgemäßen verzweigten Polymere zu ermöglichen. Im Falle einer radikalischen Polymerisation des Basismoleküls können als Polyethylenglykol-haltige monomere Einheiten beispielsweise Polyethylenglykolmonoacrylate oder Polyethylenglykolmonomethacrylate mit 5 bis 80 C-Atomen verwendet werden. Solche Produkte sind besonders für wässrige Lacksysteme geeignet.

Des Weiteren können monomere Einheiten mit funktionellen Gruppen verwendet werden, um eine spätere Einbindung in die jeweilige polymere Matrix oder das Bindemittel zu ermöglichen. Im Falle einer radikalischen Polymerisation des Basismoleküls können als monomere Einheiten mit funktionellen Gruppen beispielsweise Acrylnitril, Acrylsäure, Methacrylsäure, Hydroxyalkylacrylate oder Hydroxyalkylmethacrylaten von geradkettigen, verzweigten oder cycloaliphatischen Diolen mit 2 bis 36 C-Atomen, Epoxyalkylacrylate oder Epoxyalkylmethacrylate von geradkettigen, verzweigten oder cycloaliphatischen Hydroxyepoxiden mit 3 bis 6 C-Atomen, oder aber Vinyltrialkoxysilane mit 5 bis 8 C-Atomen verwendet werden. Auch ethylenisch ungesättigte Verbindungen enthaltend eine Isocyanatgruppe, wie beispielsweise Isocyanatomethylmethacrylat oder Isopropenylcumylisocyanat, können bei einer radikalischen Polymerisation des Basismoleküls verwendet werden.

Um die Oberflächenspannung der Polydiorganosiloxanseitenkeiten-enthaltenden verzweigten Polymere stark zu erniedrigen, ist es vorteilhaft, geringe Mengen an monomeren Einheiten mit Perfluoralkylgruppen mit einzupolymerisieren. Im Falle einer radikalischen Polymerisation des Basismoleküls können als monomere Einheiten mit Perfluoralkylgruppen beispielsweise Perfluoralkylacrylate oder Perfluormethacrylate mit 6 bis 20 C-Atomen verwendet werden.

Um eine ausreichende Verträglichkeit der Polydiorganosiloxanseitenketten-haltigen verzweigten Polymere mit den Beschichtungsmitteln bzw. den polymeren Formmassen zu gewährleisten, ist es sinnvoll, Hydroxy- und Säurefunktionalität in das verzweigte Polymer einzubauen. Bevorzugt sind erfindungsgemäße verzweigte Polymere mit einer OH-Zahl zwischen 70 und 150 mg KOH/g und einer Säurezahl zwischen 0,5 und 30 mg KOH/g. Auch der Einbau von Polyestern in Form Caprolacton- und/oder Valerolacton-modifizierter monomerer Einheiten in das polymere Basismolekül ist möglich. Bei radikalischer Polymerisation des Basismoleküls sind hier Caprolacton- und/oder Valerolacton-modifizierte Hydroxyalkylacrylate und Caprolacton- und/oder Valerolacton-modifizierte Hydroxyalkylmethacrylate

mit einem mittleren Molekulargewicht von 220 bis 1.200 bevorzugt, wobei die Hydroxyalkylacrylate und die Hydroxyalkylmethacrylate bevorzugt von geradkettigen, verzweigten oder cycloaliphatischen Diolen mit 2 bis 8 C-Atomen abgeleitet sind.

Ganz besonders bevorzugte monomere Einheiten des Basismoleküls bei radikalischer Polymerisation sind ausgewählt aus der Gruppe bestehend aus Acrylsäure, Methacrylsäure, Methylacrylat, Methylmethacrylat, Ethylacrylat, Ethylmethacrylat, n-Butylacrylat, n-Butylmethacrylat, i-Butylacrylat, i-Butylmethacrylat, t-Butylacrylat, t-Butylmethacrylat, Laurylacrylat, Laurylmethacrylat, 2-Ethylhexlacrylat, 2-Ethylhexlmethacrylat Stearylacrylat, Stearylmethacrylat, Behenylacrylat, Behenylmethacrylat, Cyclohexylacrylat, Cyclohexylmethacrylat, Isobornylacrylat, Isobornylmethacrylat, Hydroxyethylacrylat, Hydroxyethylmethacrylat, Glycidoxipropylacrylat, Glycidoxipropylmethacrylat, Vinyltriethoxysilan, Methacryloxypropyltrimethoxysilan, Isocyanatomethylmethacrylat, Isopropenylcumylisocyanat, Styrol, α-Methylstyrol, Acrylnitril, Triethylenglycolmonoacrylat, Triethylenglycolmonomethacrylat, Ethylvinylether, Eutylvinylether, Cyclohexylvinylether, Vinylacetat, N-N-Dimethylaminoethylacrylat, N-N-Dimethylaminoethylmethacrylat, N,N-Dimethylaminopropylacrylat, N,N-Dimethylaminopropylmethacrylat, Polyethylenglykolmonoacrylat, Polyethylenglykolmonomethacrylat sowie Caprolacton- und/oder Valerolacton-modifiziertes Hydroxyethylacrylat und Caprolacton- und/oder Valerolacton-modifiziertesHydroxyethylmethacrylat mit einem Molekulargewicht zwischen 220 bis 1.200.

Die Polydiorganosiloxanseitenketten in den verzweigten Polymeren, die den erfindungsgemäßen Beschichtungsmitteln und polymeren Formmassen zugesetzt werden, weisen ein Gewichtsmittel des Molekulargewichtes von 1.000 bis 30.000 auf und sind über eine Si-C-Bindung an das polymere Basismolekül gebunden. Wenn das Basismolekül ein Polymer aus radikalischer Polymerisation ist, so können die Polydiorganosiloxanseitenketten in Form von monoethylenisch ungesättigten Polydiorganosiloxanen (=Polydiorganosiloxanmakromonomere) mit einpolymerisiert werden. Als monoethylenisch ungesättigte Polydiorganosiloxane können z. B. Polydiorganosiloxanmono(meth)acrylate, Polydiorganosiloxanmonoalkene usw. verwendet werden. Wenn das Basismolekül ein Polykondensat oder Polyaddukt ist, so können die Polydiorganosiloxangruppen zum Beispiel in Form von Polydiorganosiloxanmonoolen einpolymerisiert werden.

Ein Beispiel für ein monoethylenisch ungesättigtes Polydiorganosiloxanmakromonomer, mit dessen Hilfe eine Polydimethylsiloxanseitenkette in das Polymer einpolymerisiert werden kann, ist etwa α-Butyldimethylsiloxy-ω-(3-methacryloxypropyl)-polydimethylsiloxan:

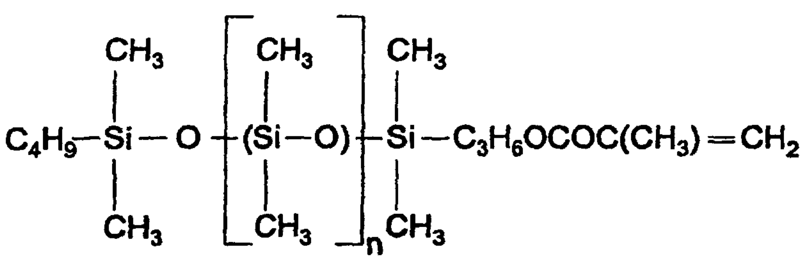

Weitere Beispiele für Polydimethylsiloxanseitenketten, die als Polydimethysiloxanmakromonomere in das polymere Basismolekül einpolymerisiert werden können, finden sich z. B. in der Veröffentlichung von Koichi Ito, *"Polymeric Design by Macromonomer Technique",* Prog. Polym. Sci, Vol. 23, Seite 607, 1998. Hier ist auch die Her stellung dieser nur an einem Kettenende modifizierten Polydimethylsiloxane beschrieben.

Grundsätzlich können die Polydiorganosiloxanseitenketten jedoch auch durch Reaktion des polymeren Basismoleküls mit einem einseitig endständigen hydroxyfunktionellen Polydiorganosiloxan mit dem Basismolekül verknüpft werden. Auch andere einseitig endständig modifizierten Polydiorganosiloxane, wie z.B. endständig epoxymodifizierte Polydiorganosiloxane, können eingesetzt werden. Voraussetzung hierfür ist allerdings, daß das Basismolekül entsprechende funktionelle Gruppen, wie etwa Hydroxygruppen oder Carboxylgruppen, aufweist.

Ein Beispiel für ein endständig einseitig hydroxyfunktionelles Polydimethylsiloxan, mit dessen Hilfe durch Reaktion mit dem polymeren Basismoleküls eine Polydimethylsiloxanseitenkette in das Polymer eingebaut werden kann, ist z. B. α-Butyldimethylsiloxy-ω-(3-(2-hydroxyethoxy)propyl))-polydimethylsiloxan:

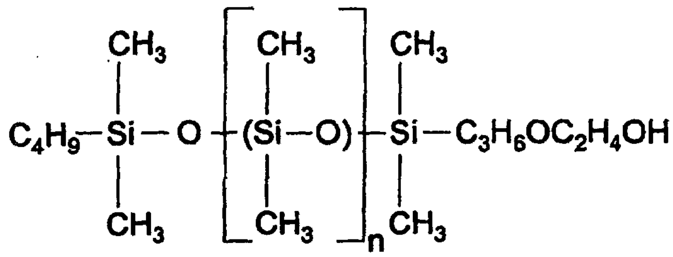

Des Weiteren ist es möglich, die verzweigten Polymere z. B. durch Umesterung von esterhaltigen Polymeren mit einseitig endständig hydroxyfunktionellen Polydiorganosiloxanen zu erhalten. Hierbei können auch Mischungen von einseitig endständig hydroxyfunktionellen Polydiorganosiloxanen unterschiedlicher Kettenlängen eingesetzt werden. Auch die Umsetzung von epoxyfunktionellen oder isocyanatfunktionellen Polymeren mit einseitig endständig hydroxyfunktionellen und carboxyfunktionellen Polydiorganosiloxanen ist möglich.

Die Herstellung der verzweigten Polymere ist auch durch die lebende radikalische Polymerisation und die "*Group Transfer Polymerization"* möglich.

Das Gewichtsmittel des Molekulargewichtes der Polydiorganosiloxanseitenketten liegt zwischen 1.000 und 30.000, bevorzugt zwischen 3.000 und 10.000. Der Anteil der Polydiorganoslioxanseitenketten in den verzweigten Polymeren beträgt zwischen 5 und 25 Gew.-%, bevorzugt zwischen 7,5 und 12,5 Gew.-%. Es können zur Herstellung der verzweigten Polymere Polydiorganosiloxanseitenketten gleicher Kettenlänge verwendet werden oder Mischungen von Polydiorganosiloxanseitenketten unterschiedlicher Kettenlänge.

Die Bindung der Polydiorganosiloxanseitenketten erfolgt bevorzugt über eine Struktur, die ausgewählt ist aus den Strukturen

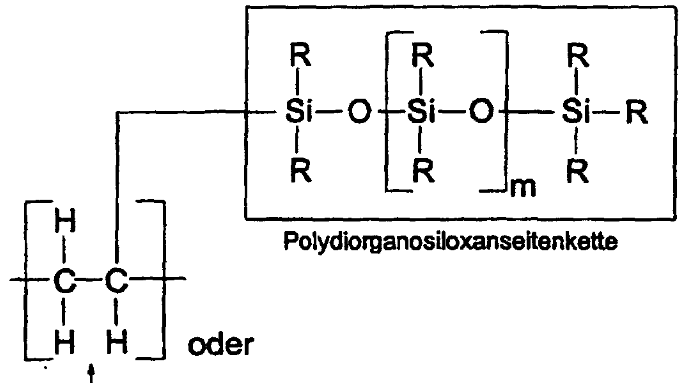


oder

monomere Einheit des Basismoleküls

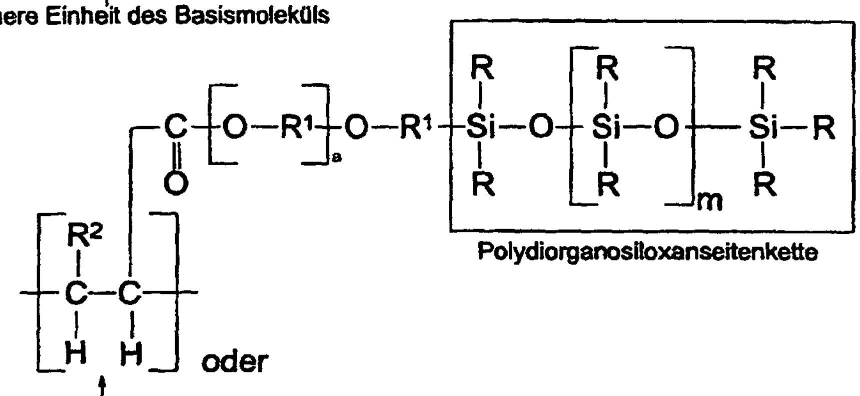


oder

monomere Einheit des Basismoleküls

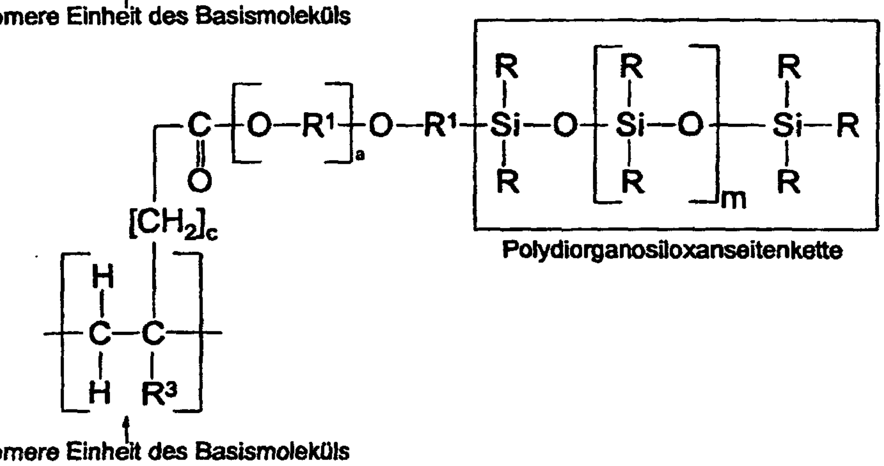


monomere Einheit des Basismoleküls

in dener

die Reste R einem geradkettigen Alkylrest mit 1 bis 8 C-Atomen oder einem Perfluoralkylrest mit 3 bis 10 C-Atomen entsprechen, wobei die Reste R innerhalb einer Polydiorganosiloxanseitenkette gleich oder verschieden sein können,

die Reste $R^1$ einem geradkettigen oder verzweigten Alkenylrest mit 2 bis 8 C-Atomen entsprechen,

der Rest $R^2$ einem Wasserstoffatom oder einem Rest -COOR' entspricht, wobei der Rest R' ein Wasserstoffatom oder einen gesättigten oder ungesättigten, geradkettigen, verzweigten oder cycloaliphatischen Alkylrest mit 1 bis 22 C-Atomen darstellt,

der Rest $R^3$, wenn c gleich 1 ist, einem Rest -COOR' entspricht und, wenn c gleich 0 ist, einem Rest $-(CH_2)-COOR'$ oder einer Methylgruppe entspricht, wobei der Rest R' wie zuvor definiert ist,

der Koeffizient a einen Wert von 0 bis 10 annehmen kann, und in denen

m so gewählt ist, daß das Molekulargewicht der Polydiorganosiloxanseitenketten zwischen 1.000 und 30.000 liegt.

Die Gewichtsmittel des Molekulargewichts der verzweigten Polymere liegen im Bereich von 2.000 bis 200.000, bevorzugt von 5.000 bis 75.000, besonders bevorzugt im Bereich von 10.000 bis 50.000.

Die Herstellung der polymeren Basismoleküle erfolgt in der für den Fachmann bekannter Weise. Im Falle der radikalischen Polymerisation des Basismoleküls erfolgt die Herstellung z. B. mittels Peroxiden oder Azoverbindungen als Radikalbildner (Initiatoren) in organischen Lösemitteln oder in Masse. Als Lösemittel kommen Ester, wie z. B. Ethylacetat, n-Butylacetat oder 1-Methoxy-2-propylacetat, sowie aromatische Lösemittel, wie z. B. Toluol oder Xylol, oder aber Ketone, wie z. B. Methylisobutylketon oder Methylethylketon, in Frage. Die Wahl des Lösemittels richtet sich nach dem späteren Einsatzzweck des verzweigten Polymeren. Bevorzugt werden niedrigsiedende Lösemittel eingesetzt, um das Abdestillieren dieser Lösemittel im Falle einer möglichen Verwendung des verzweigten Polymers in reiner Form zu ermöglichen.

Als Initiatoren kommen Peroxide, wie z. B. tert.-Butylperoxobenzoat oder Dibenzoylperoxid, in Frage. Es können aber auch Azo-Verbindungen, wie z. B. Azoisobutyronitril (AIBN), eingesetzt werden. Bevorzugt werden Peroxide eingesetzt. Die Polymerisation wird bei Temperaturen von ca. 40° C bis 180° C, bevorzugt bei 100° C bis 150° C, besonders bevorzugt bei 110° C bis 130° C durchgeführt.

Die verzweigten Polymere können durch polymeranaloge Reaktion noch nachträglich modifiziert werden. Z. B. kann durch die Reaktion eines verzweigten Polymers, das hydroxyfunktionelle monomere Einheiten im Basismolekül enthält, mit Maleinsäureanhydrid eine reaktive Doppelbindung und Säurefunktion mit eingebaut werden. Weitere geeignete Anhydride zur Einführung der Säurefunktion sind z. B. Bernsteinsäureanhydrid, Phthalsäureanhydrid und Trimellitsäureanhydrid, wobei hydroxyfunktionelle monomere Einheiten innerhalb eines verzweigten Polymers auch mit strukturell verschiedenen Anhydriden verestert werden können. Die Säurefunktion kann zur besseren Wasserlöslichkeit z. B. mit Alkanolaminen auch versalzt wer den. Weiterhin können durch nachträgliche Acrylierung und/oder Methacrylierung an der Hydroxygruppe Produkte erhalten werden, die sich auch bei strahlenhärtenden Prozessen, wie UV- und Elektronenstrahlhärtung, fest in Lacksysteme einbauen lassen.

Die erfindungsgemäßen Beschichtungsmittel und polymeren Formmassen können pigmentiert oder unpigmentiert eingesetzt werden, außerdem können die Beschichtungsmittel und polymeren Formmassen Füllstoffe wie Calciumcarbonat, Aluminiumhydroxid, verstärkende Fasern wie Glasfasern, C-Fasern und Aramidfasern enthalten. Des Weiteren können die erfindungsgemäßen Beschichtunsgmittel und polymere Formmassen andere übliche Additive enthalten, wie z. B. Netz- und Dispergiermittel Lichtschutzmittel, Alterungsschutzmittel usw..

Die erfindungsgemäßen Beschichtungsmittel enthalten bevorzugt mindestens ein Bindemittel. Bei den erfindungsgemäßen Beschichtungsmitteln handelt es sich bevorzugt um Beschichtungsmittel zur Herstellung von Antigraffitibeschichtungen, Trennbeschichtungen, selbstreinigenden Fassadenbeschichtungen, eisabweisenden Beschichtungen, z.B. für Flugzeuge, Beschichtungen für Autoräder, schmutzabweisende Maschinen-/Gerätebeschichtungen, Bootsbeschichtungen (Antifoulingbeschichtungen), sowie schmutzabweisenden Möbel- und Trennpapierbeschichtungen. Bedingt durch die hervorragende Verträglichkeit der verzweigten Polymere sind diese auch hervorragend zur Herstellung transparenter Beschichtungen geeignet.

Die erfindungsgemäßen Beschichtungmittel enthalten die verzweigten Polymere als Additiv in Mengen von 0,1 bis 10 Gew.-%, bevorzugt von 0,5 bis 7,5 Gew.-%, ganz besonders bevorzugt von 1 bis 5 Gew.-% bezogen auf den Feststoffgehalt des Beschichtungsmittels. Die verzweigten Polymere werden bevorzugt als Lösung oder als Emulsionen den erfindungsgemäßen Beschichtungsmitteln zugesetzt.

Die erfindungsgemäßen Beschichtungsmittel können auf einer Vielzahl von Substraten aufgebracht werden, wie beispielsweise Holz, Papier, Glas, Keramik, Putz, Beton und Metall. Die Beschichtungen können auch im Mehrschichtverfahren auf Grundierungen, Füller oder Basislacken aufgebracht werden. Die Aushärtung der Beschichtungsmittel ist abhängig von der jeweiligen Art der Vernetzung und kann im weiten Temperaturbereich von beispielsweise -10°C bis 250°C erfolgen. Über raschenderweise zeigen die erfindungsgemäßen Beschichtungsmittel auch bei Aushärtung bei Raumtemperatur sehr gute anti-adhäsive schmutzabweisende Eigenschaften.

Auf Grund der außergewöhnlich guten Anti-Adhäsion der erfindungsgemäßen Beschichtungsmittel werden auch ölhaltige Substanzen wie z.B. Mineralöle, pflanzliche Öle, oder ölige Zubereitungen abgewiesen, so daß eine Restentleerung von entsprechenden ölhaltigen Gebinden möglich wird. Die so additivierten Beschichtungsmittel eignen sich demzufolge auch für Doseninnenbeschichtungen und Faßinnenlackierungen.

Bei den erfindungsgemäßen polymeren Formmassen handelt es sich bevorzugt um Lackharze, Alkydharze, Polyesterharze, Epoxidharze, Polyurethanharze, ungesättigte Polyesterharze, Epoxidharze Vinylesterharze, Polyethylen, Polypropylen, Polyamide, Polyethylentherphthalat, PVC, Polystyrol, Polyacrylnitril, Polybutadien, Polyvinylchlorid oder Mischungen aus diesen Polymeren.

Die erfindungsgemäßen polymeren Formmassen enthalten die verzweigten Polymere als Additiv in Mengen

von 0,1 bis 10 Gew.-%, bevorzugt von 0,5 bis 7,5 Gew.-%, ganz besonders bevorzugt von 1 bis 5 Gew.-% bezogen auf das Gesamtgewicht der polymeren Formmassen. Die verzweigten Polymere werden den polymeren Formmassen bevorzugt als 100%-ige Stoffe zugesetzt.

A) SYNTHESEBEISPIELE ZUR HERSTELLUNG DER VERZWEIGTEN POLYMERE

SYNTHESEBEISPIELE FÜR VERZWEIGTE POLYMERE AUS RADIKALISCHER POLYMERISATION

Beispiel 1:

In einem mit Rührer, Thermometer, Tropftrichter, Destillationsaufsatz und Stickstoffeinleitungsrohr versehenen Vierhalskolben werden 10 g eines Polydimethylsiloxanmakromonomeren mit einer terminalen Methacrylgruppe und einem Gewichtsmittel des Molekulargewichtes von 5.000 und 100 g Methoxypropylacetat vorgelegt und gründlich vermischt. Während der gesamten Reaktion wird Stickstoff übergeleitet. Die Temperatur wird auf 122°C erhöht und es wird innerhalb von vier Stunden eine Mischung aus 2 g Methacrylsäure, 42,7 g iso-Butylmethacrylat, 26,0 g Hydroxypropylmethacrylat, 29,3 g Styrol und 1,5 g Trigonox C (tert.-Butyl-peroxybenzoat, Akzo Nobel, NL-Amersfoort) zudosiert. Nach beendeter Dosierung werden sofort 0,25 g Trigonox C zugegeben. Nach weiteren 30 Minuten und 60 Minuten werden noch einmal je 0,25 g Trigonox C zugesetzt. Danach wird der Ansatz noch eine Stunde bei 122°C gehalten. Der Ansatz ist klar und viskos. Die OH-Zahl der Polymerlösung beträgt ca. 53 mg KOH/g. NMR-spektroskopische Untersuchungen zeigen die erwarteten Sign ale des polydimethylsiloxanhaltigen Methacrylates.

Beispiel 2:

In einem mit Rührer, Thermometer, Tropftrichter, Destillationsaufsatz und Stickstoffeinleitungsrohr versehenen Vierhalskolben werden 10 g eines Polydimethylsiloxanmakromonomeren mit einer terminalen Methacrylgruppe und einem Gewichtsmittel des Molekulargewichtes von 20.000 und 100 g Methoxypropylacetat vorgelegt und gründlich vermischt. Während der gesamten Reaktion wird Stickstoff übergeleitet. Die Temperatur wird auf 122°C erhöht und es wird innerhalb von drei Stunden eine Mischung aus 2 g Methacrylsäure, 14,5 g eines Caprolacton-modifizierten Hydroxyethylacrylates (Tone M-100, Union Carbide, durchschnittliches Molekulargewicht 344), 12 g n-Butylmethacrylat, 19,5 Hydroxypropylmethacrylat, 22,8 g Styrol, 19,2 g Methylmethacrylat und 1,5 g Trigonox C (tert.-Butyl-peroxybenzoat, Akzo Nobel, NL-Amersfoort) zudosiert. Nach beendeter Dosierung werden sofort 0,25 g Trigonox C zugegeben. Nach weiteren 30 Minuten und 60 Minuten werden noch einmal je 0,25 g Trigonox C zugesetzt. Danach wird der Ansatz noch eine Stunde bei 122°C gehalten. Der Ansatz ist klar und viskos. Die OH-Zahl des Polymers beträgt ca. 53 mg KOH/g. NMR-spektroskopische Untersuchungen zeigen die erwarteten Signale des polydimethylsiloxanhaltigen (Meth)acrylates.

Beispiel 3:

In einem mit Rührer, Thermometer, Tropftrichter und Stickstoffeinleitungsrohr versehenen Vierhalskolben werden 34,5 g eines Copolymers aus Styrol und Maleinsäureanhydrid (SMA2000, Atofina, mittleres Molekulargewicht 2.500, Verhältnis Styrol/Maleinsäureanhydrid 2:1) in 50,6 g Methoxypropylacetat gelöst und die Lösung auf 120°C erwärmt. In 5 Minuten werden 3,75 g eines einseitig endständig hydroxyfunktionell modifizierten Polydimethylsiloxans mit einem Gewichtsmittel des Molekulargewichtes von 1.000 zudosiert. 30 Minuten später werden 12.6 g 2-Ethylhexanol in 5 Minuten zudosiert. Danach wird die Reaktionsmischung noch 2 Stunden bei 120°C und eine Stunde bei 50°C gehalten. Man erhält ein klares Produkt mit einem Feststoffgehalt von etwa 50%. Bei der IR-spektroskopischen Untersuchung ist kein Anhydrid mehr zu erkennen. Das mittlere Molekulargewicht des Polymers beträgt etwa 3.800. NMR-spektroskopische Untersuchungen zeigen die erwarteten Signale des polydimethylsiloxanmodifizierten Styrol/Maleinsäure-Halbester-Copolymers.

Beispiel 4:

In einem mit Rührer, Thermometer, Tropftrichter, Destillationsaufsatz und Stickstoffeinleitungsrohr versehenen Vierhalskolben werden 10 g eines Polydimethylsiloxanmakromonomeren mit einer terminalen Methacrylgruppe und einem Gewichtsmittel des Molekulargewichtes von 5.000 und 252 g Xylol vorgelegt und gründlich vermischt. Während der gesamten Reaktion wird Stickstoff übergeleitet. Die Mischung wird auf 130°C erhitzt und innerhalb von 220 Minuten wird eine Mischung aus 5 g Caprolacton-modifiziertem Hydroxyethylacrylat (Tone M-100, Union Carbide, durchschnittliches Molekulargewicht 344), 49 g n-Butylmethacrylat, 12 g Hydroxyethylmethacrylat, 23,5 g $\alpha$-Methylstyrol und 1,5 g Trigonox C (tert.-Butyl-peroxybenzoat, Akzo Nobel, NL-Amersfoort) zudosiert. Nach beendeter Dosierung wird die Reaktionsmischung noch eine Stunde bei 130°C gehalten. Der Ansatz ist jetzt milchig trüb. Zur Entfernung der Lösemittel und überschüssiger Reaktionspartner wird die Mischung einer Destillation unter reduziertem Vakuum unterworfen. Nach einer Destillationszeit von 2 Stunden bei 130°C und ca. 20 mbar Vakuum erhält man in 54.5%iger Ausbeute ein opakes Polymer mit einem gewichtsmittleren Molekulargewicht von etwa 14.700. NMR-spektroskopische Untersuchungen zeigen die erwarteten Signale des polydimethylsiloxanhaltigen (Meth)Acrylates.

Beispiel 5: Herstellung eines erfindungsgemäßen Polymers durch Group-Transfer-Polymerization

Vorbereitung: Sämtliche Monomere und Lösemittel werden gereinigt, indem sie durch Glassäulen mit neutralem Aluminia geleitet werden.
In einem gut getrocknetem Vierhalskolben beschickt mit mechanischem Rührer, Rückflußkühler, Tropftrichter und einem Gummiseptum werden in trockener $N_2$-Atmosphäre 100 g vorgereinigtes Tetrahydrofuran vorgelegt. Mittels Spritzen werden durch das Septum 1,5 g des Initiators 1-Methoxy-1-trimethylsiloxy-2-methylpropen und 0,15 ml 1M Tetrabutylammonium-3-chlorbenzoat in Acetonitril als Katalysator zugesetzt. Innerhalb von 15 Minuten wird dieser Reaktionsmischung eine Mischung aus 70 g Butylmethacrylat und 20 g N,N-Dimethylaminoethylmethacrylat zugetropft. Mit Hilfe eines Wasserbades wird die Reaktionstemperatur bei 40°C gehalten. Nach einer Nachreaktionszeit von 10 Minuten werden weitere 0,15 ml 1 M Tetrabutylammomonium-3-chlorbenzoat in Acetonitril zugesetzt und innerhalb von 5 Minuten 40 g einer 50%igen Lösung eines vorgereinigten Polydimethylsiloxanmakromonomeren mit einer terminalen Methacrylgruppe und einem Gewichtsmittel des Molekulargewichtes von 1.000 in THF zugetropft. Man läßt die Reaktionslösung ohne Kühlung eine Stunde Rühren und setzt dann zum Abbruch der lebenden Kettenenden 3ml Ethanol zu. Man erhält eine leicht opake Lösung eines Polymers.

Beispiel 6:

In einem mit Rührer, Thermometer, Tropftrichter, Destillationsaufsatz und Stickstoff einleitungsrohr versehenen Vierhalskolben werden 10 g eines Polydimethylsiloxanmakromonomeren mit einer terminalen Methacrylgruppe und einem Gewichtsmittel des Molekulargewichtes von 5.000 und 100 g DIBK vorgelegt und gründlich vermischt. Während der gesamten Reaktion wird Stickstoff übergeleitet. Die Mischung wird auf 122°C erhitzt und innerhalb von 180 Minuten wird eine Mischung aus 15 g Caprolacton-modifiziertem Hydroxyethylacrylat (Tone M-100, Union Carbide, gewichtsmittleres Molekulargewicht 344), 12 g n-Butylacrylat, 20 g Hydroxyethylmethacrylat, 22,5 g Styrol, 20,5 g Methylmethacrylat und 1,5 g Trigonox C (tert.-Butyl-peroxybenzoat, Akzo Nobel, NL-Amersfoort) zudosiert. Nach beendeter Dosierung wird die Temperatur bei 122°C gehalten. Sofort nach der Dosierung, 30 Minuten später und weitere 30 Minuten später werden je 0,25 g Trigonox C zugegeben. Nach der letzten Zugabe wird noch eine Stunde nachgerührt. Die Reaktionsmischung ist jetzt leicht opak. Zur Entfernung des Lösemittels und überschüssiger Reaktionspartner wird die Mischung einer Destillation unter reduziertem Vakuum unterworfen. Nach einer Destillationszeit von 90 Minuten bei 140°C und ca. 20 mbar Vakuum erhält man in ca. 94%iger Ausbeute ein opakes Polymer. Das gewichtsmittlere Molekulargewicht wurde mittels Gel-Permeations-Chromatographie mit Polystyrol als Standard zu etwa 65.000 bestimmt.

Beispiel 7:

In einem mit Rührer, Thermometer, Tropftrichter, Destillationsaufsatz und Stickstoffeinleitungsrohr versehenen Vierhalskolben werden 5 g eines Polydimethylsiloxanmakromonomeren mit einer terminalen Methacrylgruppe und einem durchschnittlichen Molekulargewicht von 5.000, 5 g eines Polydimethylsiloxanmakromonomeren mit einer terminalen Methacrylgruppe und einem Gewichtsmittel des Molekulargewichtes von 1.000, 50 g Xylol und 50 g Butylacetat vorgelegt und gründlich vermischt. Während der gesamten Reaktion wird Stickstoff übergeleitet. Die Mischung wird auf 122°C erhitzt und innerhalb von 180 Minuten wird eine Mischung aus 15 g eines Caprolacton-modifizierten Hydroxyethylacrylat (Tone M-100, Union Carbide, durchschnittliches Molekulargewicht 344), 12 g n-Butylacrylat, 20 g Hydroxyethylmethacrylat, 22,5 g Styrol, 20,5 g Methylmethacrylat und 1,5 g Trigonox C (tert.-Butyl-peroxybenzoat, Akzo Nobel, NL-Amersfoort) zudosiert. Nach beendeter Dosierung wird die Temperatur bei 122°C gehalten. Sofort nach der Dosierung, 30 Minuten später und weitere 30 Minuten später werden je 0,25 g Trigonox C zugegeben. Nach der letzten Zugabe wird noch eine Stunde nachgerührt. Zur Entfernung der Lösemittel und überschüssiger Reaktionspartner wird die Mischung einer Destillation unter reduziertem Vakuum unterworfen. Nach einer Destillationszeit von 90 Minuten bei 140°C und ca. 20 mbar Vakuum erhält man in ca. 99,5%iger Ausbeute ein farbloses Polymer. 50 g diese Polymers werden in einer Mischung aus 25 g Xylol und 25 g Butylacetat gelöst und mit 0,05 g p-Toluolsulfonsäure und 0.42 g Maleinsäureanhydrid versetzt. Nach 3 Stunden erwärmen auf 90°C ist im IR-Spektrum kein Anhydrid mehr erkennbar.

Beispiel 8:

50 g der Polymerlösung aus Beispiel 1 mit einer OH-Zahl von ca. 53 mg KOH/g wer den mit 4,3 g Maleinsäureanhydrid versetzt und sechs Stunden unter Rühren auf 90°C erhitzt. Nach Ablauf dieser Zeit ist bei einer IR-spektroskopischen Untersuchung kein Anhydrid mehr nachweisbar. Man erhält eine leicht gelb gefärbte 56,3%ige Polymerlösung.

SYNTHESEBEISPIEL FÜR EIN POLYKONDENSAT

Beispiel 9:

In einem mit Rührer, Thermometer und Wasserabscheider versehenen Dreihalskolben werden 100 g Setal 183 XX-60 (gesättigtes Polyesterharz, als Lieferform 60%ige Lösung in Xylol, Säurezahl 8,3 mg KOH/g, Akzo Nobel Resins, NL-Bergen op Zoom) zusammen mit 7,5 g eines Polydimethylsiloxanmakromonomeren mit einer terminalen Hydroxyfunktion und einem Gewichtsmittel des Molekulargewichtes von 10.000 und 0.3 g p-Toluolsulfonsäure vorgelegt und gründlich vermischt. Danach wird der Ansatz etwa sechs Stunden am Rückfluß gekocht, bis das entstehende Wasser entfernt ist. Es stellt sich eine Temperatur von etwa 142 bis 145°C ein. Man erhält eine gelbbraun gefärbte Polymerlösung. NMR-spektroskopische Untersuchungen zeigen die erwarteten Strukturen eines über Esterbindung verknüpften Polydiorganosiloxans. Im IR-Spektrum sind keine OH-Gruppen sichtbar.

SYNTHESEBEISPIEL FÜR EIN POLYADDUKT

Beispiel 10:

In einem mit Rührer, Thermometer und Stickstoffeinleitungsrohr und Tropftrichter versehenen Vierhalskolben werden 50 g n-Butylacetat, 5,38 g Desmodur N3300 (Isocyanurat auf Basis Hexamethylendiisocyanat, NCO-Gehalt 21,5%, Bayer AG, D-Leverkusen) und 10 g eines Polydimethylsiloxanmakromonomeren mit einer terminalen Hydroxyfunktion und einem Gewichtsmittel des Molekulargewichtes von etwa 1.000 (OH-Zahl 51,5 mg KOH/g) vorgelegt. Während der gesamten Reaktion wird trockener Stickstoff übergeleitet. Man erhitzt auf 60°C. Dann werden 0,2 g einer 1%igen Lösung von Dibutyldizinnlaurat in Xylol zugegeben. Nach 30 Minuten werden noch einmal 0.7 g einer 1%igen Lösung von Dibutyldizinnlaurat in Xylol zugegeben und man beginnt sofort mit der Dosierung einer Mischung aus 50 g n-Butylacetat, 25,17 g Isophorondiisocyanat, 55,79 g Speziol C36/2 (Dimerdiol, OH-Zahl 205 mg KOH/g, Cognis Deutschland GmbH, D-Düsseldorf) und 3,2 g 1-Butanol. Die Mischung wird so schnell zugetropft, dass die Temperatur der Mischung nicht über 65°C steigt. Die Viskosität der Lösung steigt und drei Stunden nach Beendigung der Dosierung ist titrimetrisch kein freies Isocyanat mehr nachweisbar. Man erhält eine farblose, klare Lösung. Das gewichtsmittlere Molekulargewicht wird mittels Gel-Permeations-Chromatographie zu 5.200 bestimmt.

B) ANWEDNUNGSTECHNISCHE PRÜFUNG DER VERZEIGTEN POLYMERE IN DEN ERFINDUNGSGEMÄßEN BESCHICHTUNGSMITTELN

Die anwendungstechnische Prüfung der erfindungsgemäßen Polymere erfolgte in zwei Lacksystemen.

2-Komponenten-System, isocyanatvernetzend:

| Stammlack: | |
|---|---|
| Macrynal SM 510n[1], 60%ig in Xylol/Solventnaphta/Butylacetat 2:1:1 | 75,00 |
| Dowanol PMA | 5,00 |
| Solvesso 100 | 5,00 |
| Xylol | 6,50 |
| Butylacetat | 8,00 |
| Byk 066[2] | 0,50 |
| | 100,00 |

1) hydroxygruppenhaltiges Acrylharz,Vianova Resins, D-Frankfurt

2) Entschäumer, BYK-CHEMIE, D-Wesel

(fortgesetzt)

| Stammlack: | |
|---|---|
| Alle Komponenten werden durch Rühren homogenisiert. | |
| Härterlösung: | |
| Desmodur N3390[3]; 90%ig in Butylacetat/SN100 1:1 | 50,00 |
| Butylacetat | 35,00 |
| Xylol | 15,00 |
| | 100,00 |
| Alle Komponenten werden durch Rühren homogenisiert. | |

3) Polyisocyanat, Bayer AG, D-Leverkusen

Stammlack und Härterlösung werden unabhängig voneinander hergestellt. Die in den Beispielen 1, 2, 3, 4, 6 und 7 hergestellten verzweigten Polymere werden in den Stammlack in einer Konzentration von 2,67 % bezogen auf den Feststoffanteil des Gesamtlackes eingerührt. Zum Vergleich werden auch ein Hydroxyalkylpolydimethylsiloxan (TegoProtect 5000), ein Siliconpolyacrylat (TegoProtect 5001) sowie ein hydroxyfunktionelles, lineares, polyestermodifiziertes Polydimethylsiloxan (BYK-370) eingearbeitet. Kurz vor der Applikation werden Stammlack und Härterlösung im Verhältnis 2:1 gemischt. Nach der Einarbeitung werden die additivierten Lacke in einem 100µm-Nassfilm mit einem Spiralrakel auf ein geprimertes Alublech aufgezogen. Nach 30 Minuten Trocknen bei Raumtemperatur werden die Bleche noch 30 Minuten bei 80°C im Lacktrockenschrank ausgehärtet. Von jedem additivierten Lack werden jeweils zwei Bleche gefertigt.

Je ein Blech wird in einer Laborspülmaschine mit einem konventionellen Haushaltspülmittel bei 80°C gewaschen. Nach den Waschen werden die fertigen lackierten Bleche mindestens 24 Stunden bei Raumtemperatur konditioniert. Danach werden die unbehandelten und die behandelten Bleche den unten angegebenen Tests unterzogen.

Acrylat/Melamin-Einbrennlack:

| Acrylat/Melamin-Einbrennlack: | |
|---|---|
| Setalux C1502[4] | 54,00% |
| Maprenal MF600[5] | 28,00% |
| Shellsol | 4,00% |
| Solvesso 150 | 4,00% |
| Xylol | 10,00% |
| Total | 100,00% |

4) Acrylat-Einbrennharz, Akzo Nobel Resins, NL-Bergen op Zoom
5) Melamin-Einbrennharz, Vianova Resins, D-Frankfurt

Herstellung des Acrylat-Melamin-Einbrennlackes:

Alle Komponenten werden gemischt und 10 Minuten mit einem Dissolver bei einer Umfansgeschwindigkeit von 5 m/s homogenisiert. Danach wird die Viskosität auf 24 Sekunden, DIN 4mm-Becher, mit Xylol eingestellt. Die zu prüfenden Additive werden 10 Minuten mit einem Scandex-Rüttler in einer Konzentration von 2 Gew.-% Wirksubstanz bezogen auf den Feststoffanteil des Lackes eingearbeitet. Zum Vergleich werden die bei der Herstellung des Einbrennlackes beschriebenen Verbindungen (TegoProtect 5000, TegoProtect 5001 sowie BYK-370) zugesetzt.

Nach der Einarbeitung werden die additivierten Lacke in einem 100 µm-Nassfilm mit einem Spiralrakel auf ein geprimertes Alublech aufgezogen. Nach einer Ablüftzeit von 10 Minuten werden die Bleche 20 Minuten bei 140°C eingebrannt. Von jedem additivierten Lack werden jeweils zwei Bleche gefertigt. Je ein Blech wird in einer Laborspülmaschine mit einem konventionellen Haushaltspülmittel bei 80°C gewaschen. Nach den Waschen werden die fertigen lackierten Bleche mindestens 24 Stunden bei Raumtemperatur konditioniert. Danach werden die unbehandelten und die behandelten Bleche den nachfolgenden Tests unterzogen.

Die erhaltenen Lackfilme werden hinsichtlich ihrer schmutz-, wasser- und ölabweisenden Wirkung nach folgenden Kriterien beurteilt:

Edding-Test:

Es wird mit einem Permanent-Marker der Type "Edding 400" die Lackoberfläche beschriftet und visuell beurteilt, ob die Oberfläche beschreibbar ist. Es wird beurteilt, ob die Tinte die Oberfläche benetzt oder sich zusammenzieht. Nach dem Trocknen der Tinte wird versucht diese mit einem trockenen Tuch abzuwischen.

Bewertung: 1 bis 5:

1 = Tinte zieht sich zusammen, läßt sich restlos mit einem Papiertuch entfernen
5 = Tinte benetzt sehr gut den Untergrund, läßt sich praktisch nicht entfernen

Bitumen-Test:

Bitumen wird erhitzt, bis er so weit verflüssigt ist, dass er sich auf die Lackoberfläche aufbringen läßt. Nach Abkühlen der Masse wird visuell beurteilt, wie gut sich die Bitumenmasse von der Oberfläche wieder rückstandsfrei manuell ablösen läßt.

Bewertung: 1 bis 5:

1 = Bitumen läßt sich leicht und restlos entfernen
5 = Bitumen haftet fest auf der Oberfläche und läßt sich praktisch nicht entfernen

Verschmutzung mit Bayferrox-Pulver:

Auf die Lackoberfläche werden 3 Löffel Bayferrox 130M, Eisenoxid-Pigment, Bayer AG, gestreut und mit dest. Wasser in 5 Spritzgängen mit Hilfe einer Spritzflasche wieder abgespült. Die möglichst rückstandsfreie Oberfläche wird visuell beurteilt.

Bewertung: 1 bis 5:

1 = Bayferrox-Pulver läßt sich rückstandslos mit Wasser abwaschen
5 = kein Reinigungseffekt beim Abspülen mit Wasser, ein großer roter Fleck verbleibt

Wasser-Ablauftest:

Es wird ein Tropfen Wasser auf die Oberfläche gegeben. Anschließend wird die beschichtete Lackoberfläche geneigt, bis der Tropfen abläuft. Es wird visuell beurteilt, bei welchem Winkel der Tropfen abläuft und ob der Tropfen rückstandsfrei abläuft.

Bewertung: 1 bis 5:

1 = geringer Winkel genügt und der Tropfen läuft komplett rückstandsfrei ab
5 = Lackblech muss stark geneigt werden bis der Tropfen abläuft, eventuell bleiben Wasserreste auf der Lackoberfläche zurück

Mineralöl-Ablauftest:

Es wird ein Tropfen handelsübliches Mineralöl auf die Lackoberfläche gegeben. Anschließend wird die beschichtete Lackoberfläche geneigt, bis der Tropfen etwa 10 cm über die Lackoberfläche gelaufen ist. Nach Ablauf von 5 Minuten wird die Ölspur bzw. eine erneute Tropfenbildung visuell bewertet.

Bewertung: 1 bis 5:

1 = Die Ölspur bildet sich sofort in einzelne Tropfen zurück
5 = Die Ölspur bildet sich nicht zurück, sondern spreitet weiter

| Acrylat/Melamin-Einbrennlack: | | | | | | | | |
|---|---|---|---|---|---|---|---|---|
| | Edding-Test | | Bayferrox-Test | | Wasser-Ablauftest | | Öl-Ablauftest | |
| | Vor | nach | vor | Nach | vor | nach | vor | nach |
| | Reinigung | | Reinigung | | Reinigung | | Reinigung | |
| Beispiel 1 | 1 | 1 | 1 | 2 | 1 | 1 | 1 | 1 |
| Beispiel 2 | 1 | 2 | 1 | 4 | 1 | 3 | 3 | 4 |
| Beispiel 3 | 1 | 1 | 1 | 5 | 2 | 4 | 2 | 3 |
| Beispiel 4 | 1 | 1 | 2 | 4 | 1 | 2 | 3 | 4 |
| Beispiel 6 | 1 | 1 | 1 | 2 | 1 | 3 | 2 | 2 |
| Beispiel 7 | 1 | 1 | 1 | 2 | 1 | 2 | 2 | 2 |
| BYK-370 | 1 | 1 | 1 | 5 | 2 | 3 | 5 | 5 |
| TegoProtect 5000 | 1 | 1 | 5 | 5 | 1 | 5 | 2 | 5 |
| TegoProtect 5001 | 1 | 1 | 4 | 5 | 2 | 5 | 5 | 5 |

| 2 Komponenten-System, isocyanatvernetzend: | | | | | | | | | | |
|---|---|---|---|---|---|---|---|---|---|---|
| | Edding-Test | | Bayferrox-Test | | Bitumen-Test | | Wasser-Ablauftest | | Öl-Ablauftest | |
| | Vor | Nach | Vor | Nach | vor | nach | vor | nach | vor | nach |
| | Reinigung | | Reinigung | | Reinigung | | Reinigung | | Reinigung | |
| Bsp. 1 | 1 | 1 | 1 | 2 | 1 | 1 | 1 | 1 | 1 | 1 |
| Bsp. 3 | 1 | 5 | 2 | 4 | 1 | 4 | 2 | 4 | 5 | 4 |
| Bsp. 4 | 3 | 1 | 2 | 4 | 1 | 1 | 3 | 2 | 4 | 3 |
| Bsp. 6 | 1 | 1 | 4 | 4 | 1 | 1 | 2 | 3 | 1 | 1 |
| Bsp. 7 | 1 | 1 | 1 | 4 | 1 | 2 | 2 | 5 | 1 | 2 |
| BYK-370 | 1 | 1 | 4 | 5 | 1 | 1 | 3 | 5 | 5 | 5 |
| TegoProtect 5000 | 3 | 1 | 5 | 5 | 1 | 3 | 3 | 4 | 5 | 5 |
| TegoProtect 5001 | 5 | 5 | 5 | 5 | 5 | 5 | 5 | 5 | 5 | 5 |

C) ANWEDNUNGSTECHNISCHE PRÜFUNG DER VERZEIGTEN POLYMERE IN DEN ERFINDUNGSGEMÄßEN POLYMEREN FORMMASSEN

Beispiel: Gel-Coat-Mischungen

Die Polymerlösung aus Beispiel 8 wird entsprechend der nachfolgenden Tabelle mit einem Gel-Coat sowie Butanox M-50 zu den polymeren Formmassen A und B (=Gel-Coat-Mischung A und Gel-Coat-Mischung B) umgesetzt.

| Rezeptur (in Gewichtsprozent) für die getesteten Gel-Coat-Mischungen: | | |
|---|---|---|
| | Gel-Coat-Mischung A | Gel-Coat Mischung B |
| Gel-Coat[1] | 97 | 97 |
| Butanox M-50[2] | 2 | 2 |
| Polymerlösung aus Beispiel 8 | 1 | |

[1] Radikalstarter, Akzo Nobel, NL-Amersfoort
[2] Oldopal 733-0001, Büfa GmbH, D-Oldenburg

Die anti-adhäsiven Eigenschaften dieser Gel-Coat-Mischungen werden durch die Haftung dieser Gel-Coats auf Metallplatten bestimmt. Dazu werden zunächst Stahlplatten der Größe 20 x 30 x 0,05 cm durch Abwaschen mit Ethylacetat gründlich entfettet. Auf einer Stahlplatte wird ein Trennwachs TR-wax (T.R. Industries, USA-Lynwood, Calif. 90262) mit einem Papiertuch verteilt. Nach einer Ablüftzeit von 30 Minuten wird die Platte mit einem Papiertuch nachpoliert.

Anschließend wird die Gel-Coat-Mischung A wird mit einer Schichtdicke von 750µm auf die unbehandelte Metallplatte aufgebracht, die Gel-Coat-Mischung B mit einer Schichtdicke von 750 µm auf die gewachste Metallplatte und zusätzlich auf eine nichtgewachste Platte. Man läßt alle Gel-Coats drei Tage aushärten. Danach werden alle Gel-Coats zweimal mit handelsüblichem Glasfasergewebe und einer Mischung aus 98% ungesättigtem Polyesterharz Palatal P4-TV-28 (DBSR, NL-Zwolle) mit 2% Butanox M-50 (Radikalstarter, Akzo Nobel, NL-Amersfoort) überlaminiert. Nach der Aushärtung wird der Gel-Coat von der Metallplatte entfernt.

Ergebnis:

Gel-Coat-Mischung B läßt sich nicht von der ungewachsten Metallplatte, aber von der gewachsten Metallplatte entfernen. Die mit einem internen Trennmittel ausgerüstete Gel-Coat-Mischung A läßt sich von der ungewachsten Metallplatte leicht entfernen. Die Oberfläche der Gel-Coat-Mischung B von der gewachsten Metallplatte zeigt eine charakteristische Struktur hervorgerufen durch das externe Trennmittel. Die Oberfläche der mit einem internen Trennmittel ausgerüsteten Gel-Coat-Mischung A von der ungewachsten Metallplatte ist absolut glatt und zeigt einen hohen Glanz.

## Patentansprüche

1. Beschichtungsmittel mit anti-adhäsiven, schmutzabweisenden Eigenschaften, **dadurch gekennzeichnet, daß** die Beschichtungsmittel als Additiv 0.1 bis 10 Gew.-% bezogen auf den Feststoffanteil des Beschichtungsmittels eines verzweigten Polymers enthalten, welches ein Gewichtsmittel des Molekulargewichts von 2.000 bis 200.000 besitzt und aus

   (a) einem polymeren Basismolekül, sowie

   (b) über Si-C-Bindungen kovalent an das Basismolekül gebundenen Polydiorganosiloxanseitenketten, die ein Gewichtsmittel des Molekulargewichts zwischen 1.000 und 30.000 aufweisen und deren Anteil am Gesamtgewicht des Copolymers 5 bis 25 Gew.-% beträgt,

   besteht.

2. Polymere Formmassen mit anti-adhäsiven, schmutzabweisenden Eigenschaf ten, **dadurch gekennzeichnet, daß** die polymeren Formmassen als Additiv 0.1 bis 10 Gew.-% bezogen auf das Gesamtgewicht der polymeren Formmassen eines verzweigten Polymers enthalten, welches ein Gewichtsmittel des Molekulargewichts von 2.000 bis 200.000 besitzt und aus

   (c) einem polymeren Basismolekül, sowie

   (d) über Si-C-Bindungen kovalent an das Basismolekül gebundenen Polydiorganosiloxanseitenketten, die ein Gewichtsmittel des Molekulargewichts zwischen 1.000 und 30.000 aufweisen und deren Anteil am Gesamtgewicht des Copolymers 5 bis 25 Gew.-% beträgt,

besteht.

**3.** Beschichtungsmittel oder polymere Formmassen nach Anspruch 1 oder 2, **dadurch gekennzeichnet, daß** die Polydiorganosiloxanseitenketten über eine Struktur ausgewählt aus den Strukturen

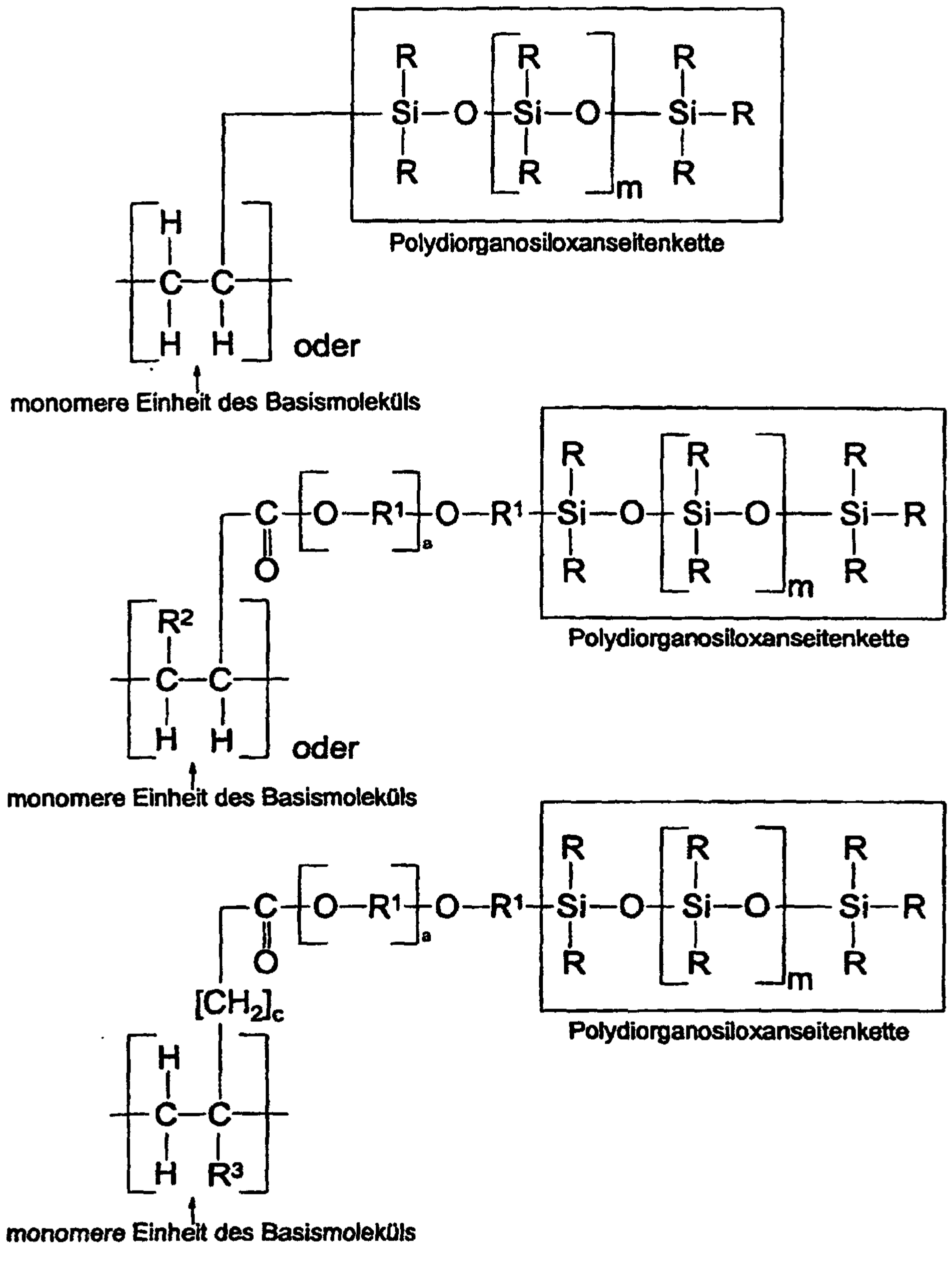


oder

oder

in denen

die Reste R einem geradkettigen Alkylrest mit 1 bis 8 C-Atomen oder einem Perfluoralkylrest mit 3 bis 10 C-Atomen entsprechen, wobei die Reste R innerhalb einer Polydiorganosiloxanseitenkette gleich oder verschieden sein können,

die Reste $R^1$ einem geradkettigen oder verzweigten Alkenylrest mit 2 bis 8 C-Atomen entsprechen,

der Rest $R^2$ einem Wasserstoffatom oder einem Rest -COOR' entspricht, wobei der Rest R' ein Wasserstoffatom oder einen gesättigten oder ungesättigten, geradkettigen, verzweigten oder cycloaliphatischen Alkylrest mit 1 bis 22 C-Atomen darstellt,

der Rest $R^3$, wenn c gleich 1 ist, einem Rest -COOR' entspricht und, wenn c gleich 0 ist, einem Rest $-(CH_2)$ -COOR' oder einer Methylgruppe entspricht, wobei der Rest R' wie zuvor definiert ist,

der Koeffizient a einen Wert von 0 bis 10 annehmen kann, und in denen

m so gewählt ist, daß das Molekulargewicht der Polydiorganosiloxanseitenketten zwischen 1.000 und 30.000 liegt,

an das Basismolekül gebunden sind.

4. Beschichtungsmittel oder polymere Formmassen nach einem oder mehreren der Ansprüche 1 bis 3, **dadurch gekennzeichnet, daß** die Polydiorganosiloxanseitenketten in Form eines Monoisocyanatadduktes an das polymere Basismolekül gebunden sind.

5. Beschichtungsmittel oder polymere Formmassen nach einem oder mehreren der Ansprüche 1 bis 4, **dadurch gekennzeichnet, daß** das Basismolekül ein Polymer aus radikalischer Polymerisation, ein Polykondensat oder ein Polyaddukt ist.

6. Beschichtungsmittel oder polymere Formmassen nach einem oder mehreren der Ansprüche 1 bis 5, **dadurch gekennzeichnet, daß** das Basismolekül als Polymer aus radikalischer Polymerisation aus monomeren Einheiten aufgebaut ist, die ausgewählt sind aus der Gruppe bestehend aus Alkenen und Arylalkenen mit 2 bis 30 C-Atomen, Alkylacrylaten und Alkylmethacrylaten von geradkettigen, verzweigten oder cycloaliphatischen Alkoholen mit 1 bis 22 C-Atomen, Aralkylacrylaten und Aralkylmethacrylaten von Aralkylalkoholen mit 8 bis 18 C-Atomen, Polyethylenglykolmonoacrylaten oder Polyethylenglykolmethacrylaten mit 5 bis 80 C-Atomen, Hydroxyalkylacrylaten und Hydroxyalkylmethacrylaten von geradkettigen, verzweigten oder cycloaliphatischen Diolen mit 2 bis 36 C-Atomen, Epoxyalkylacrylaten und Epoxyalkylmethacrylaten von geradkettigen, verzweigten oder cycloaliphatischen Hydroxyepoxiden mit 3 bis 6 C-Atomen, Acrylsäureamiden und Methacrylsäureamiden von geradkettigen, verzweigten oder cycloaliphatischen Aminen mit 1 bis 22 C-Atomen, Aminoalkylacrylaten und Aminoalkylmethacrylaten von geradkettigen, verzweigten oder cycloaliphatischen Aminoalkoholen mit 2 bis 8 C-Atomen, Maleinsäureestem, Itaconsäureestern und Fumarsäureestern von geradkettigen, verzweigten oder cycloaliphatischen Alkoholen mit 1 bis 22 C-Atomen, Perfluoralkylacrylaten und Perfluoralkylmethacrylaten mit 6 bis 20 C-Atomen, Vinylestern, Vinylethern und Vinylketonen mit 3 bis 20 C-Atomen, Vinyltrialkoxysilanen mit 5 bis 8 C-Atomen, Methacryloxypropyltrialkoxysilanen mit 10 bis 16 C-Atomen, sowie Caprolacton- und/oder Valerolacton-modifizierten Hydroxyalkylacrylaten und Caprolacton- und/oder Valerolacton-modifizierten Hydroxyalkylmethacrylaten mit einem mittlerer Molekulargewicht von 220 bis 1200, wobei die Hydroxyalkylacrylate und die Hydroxyalkylmethacrylate bevorzugt von geradkettigen, verzweigten oder cycloaliphatischen Diolen mit 2 bis 8 C-Atomen abgeleitet sind.

7. Beschichtungsmittel oder polymere Formmassen nach einem oder mehreren der Ansprüche 1 bis 6, **dadurch gekennzeichnet, daß** das Basismolekül als Polymer aus radikalischer Polymerisation aus monomeren Einheiten aufgebaut ist, die ausgewählt sind aus der Gruppe bestehend aus Acrylsäure, Methacrylsäure, Methylacrylat, Methylmethacrylat, Ethylacrylat, Ethylmethacrylat, n-Butylacrylat, n-Butylmethacrylat, i-Butylacrylat, i-Butylmethacrylat, t-Butylacrylat, t-Butylmetacrylat, Laurylacrylat, Laurylmethacrylat, 2-Ethylhexlacrylat, 2-Ethylhexlmethacrylat, Stearylacrylat, Stearylmethacrylat, Behenylacrylat, Behenylmethacrylat, Cyclohexylacrylat, Cyclohexylmethacrylat, Isobornylacrylat, Isobornylmethacrylat, Hydroxyethylacrylat, Hydroxyethylmethacrylat, Glycidoxipropylacrylat, Glycidoxipropylmethacrylat, Vinyltriethoxysilan,Methacryloxypropyltrimethoxysilan, Isocyanatomethylmethacrylat, Isopropenylcumylisocyanat, Styrol, $\alpha$-Methylstyrol, Acrylnitril, Triethylenglycolmonoacrylat,Triethylenglycolmonomethacrylat,Ethyvinylether,Butylvinylether,Cyclohexylvinylether,Vinylacetat,N-N-Dimethylaminoethylacrylat, N-N-Dimethylaminoethylmethacrylat, N,N-Dimethylaminopropylacrylat, N,N-Dimethylaminopropylmethacrylat, Polyethylenglykolmonoacrylat, Polyethylenglykolmonomethacrylat, sowie Caprolacton- und/oder Valerolacton-modifiziertem Hydroxyethylacrylat und Caprolacton- und/oder Valerolacton-modifiziertem Hydroxyethylmethacrylat mit einem Molekulargewicht zwischen 220 und 1.200.

8. Beschichtungsmittel oder polymere Formmassen nach einem oder mehreren der Ansprüche 1 bis 7, **dadurch gekennzeichnet, daß** der Anteil der Polydiorganosiloxanseitenketten am Gesamtgewicht des verzweigten Polymers 5 bis 20 Gew.-% beträgt.

9. Beschichtungsmittel oder polymere Formmassen nach einem oder mehreren der Ansprüche 1 bis 8, **dadurch gekennzeichnet, daß** der Anteil der Polydiorganosiloxanseitenketten am Gesamtgewicht des verzweigten Polymers 7,5 bis 12,5 Gew.-% beträgt.

10. Beschichtungsmittel oder polymere Formmassen nach einem oder mehreren der Ansprüche 1 bis 9, **dadurch gekennzeichnet, daß** im polymeren Basismolekül vorhandene funktionelle Hydroxylgruppen verestert sind mit einer Verbindung ausgewählt aus der Gruppe bestehend aus Maleinsäureanhydrid, Bernsteinsäureanhydrid, Phthalsäureanhydrid, Trimellitsäureanhydrid Acrylsäure und Methacrylsäure.

11. Beschichtungsmittel oder polymere Formmassen nach einem oder mehreren der Ansprüche 3 bis 10, **dadurch gekennzeichnet, daß** der Koeffizient a einen Wert von 0 bis 5 annehmen kann.

12. Beschichtungsmittel oder polymere Formmassen nach einem oder mehreren der Ansprüche 1 bis 11, **dadurch gekennzeichnet, daß** das verzweigte Polymer ein Gewichtsmittel des Molekulargewichtes von 5.000 bis 75.000 besitzt.

13. Beschichtungsmittel oder polymere Formmassen nach einem oder mehreren der Ansprüche 1 bis 12, **dadurch gekennzeichnet, daß** das verzweigte Polymer ein Gewichtsmittel des Molekulargewichtes von 10.000 bis 50.000 besitzt.

14. Beschichtungsmittel nach einem oder mehreren der Ansprüche 1 bis 13, **dadurch gekennzeichnet, daß** die Beschichtungsmittel das verzweigte Polymer als Additiv in einer Menge von 0,5 bis 5 Gew.-% bezogen auf den Feststoffanteil des Beschichtungsmittels enthalten.

15. Beschichtungsmittel nach einem oder mehreren der Ansprüche 1 bis 14, **dadurch gekennzeichnet, daß** es sich bei den Beschichtungsmitteln um Beschichtungsmittel zur Herstellung von Antigraffitibeschichtungen, Trennbeschichtungen, selbstreinigenden Fassadenbeschichtungen, eisabweisenden Beschichtungen, Beschichtungen für Autoräder, schmutzabweisenden Maschinen-/Gerätebeschichtungen, Antifoulingbeschichtungen für Boote, sowie schmutzabweisenden Möbel- und Trennpapierbeschichtungen handelt.

16. Polymere Formmassen nach einem oder mehreren der Ansprüche 1 bis 15, **dadurch gekennzeichnet, daß** die polymeren Formmassen das verzweigte Polymer als Additiv in einer Menge von 0,5 bis 5 Gew.-% bezogen auf das Gesamtgewicht der polymeren Formmassen enthalten.

17. Polymere Formmassen nach einem oder mehreren der Ansprüche 1 bis 16, **dadurch gekennzeichnet, daß** es sich bei den polymeren Formmassen um Lackharze, Alkydharze, Polyesterharze, Epoxidharze, Polyurethanharze, ungesättigte Polyesterharze, Vinylesterharze, Polyethylen, Polypropylen, Polyamide, Polyethylentherephthalat, PVC, Polystyrol, Polyacrylnitril, Polybutadien, Polyvinylchlorid oder Mischungen aus diesen Polymeren handelt.

18. Verwendung von verzweigten Polymeren, welche ein Gewichtsmittel des Molekulargewichts von 2.000 bis 200.000 besitzen und aus

    (e) einem polymeren Basismolekül, sowie

    (f) über Si-C-Bindungen kovalent an das Basismolekül gebundenen Polydiorganosiloxanseitenketten, die ein Gewichtsmittel des Molekulargewichts zwischen 1.000 und 30.000 aufweisen und deren Anteil am Gesamtgewicht des Copolymers 5 bis 25 Gew.-% beträgt,

    bestehen, als Additiv für Beschichtungsmittel oder polymere Formmassen.

## Claims

1. Coating compositions having anti-adhesion and dirt repellency properties, **characterized in that** the compositions comprise as additive from 0.1 to 10% by weight, based on the solids content of the coating composition, of a branched polymer which possesses a weight-average molecular weight of from 2000 to 200,000 and comprises

(a) a polymeric base molecule, and

(b) polydiorganosiloxane side chains which are bonded covalently to the base molecule via Si-C bonds, have a weight-average molecular weight of between 1000 and 30,000, and whose fraction of the total weight of the copolymer is from 5 to 25% by weight.

**2.** Polymeric moulding compounds having anti-adhesion and dirt repellency properties, **characterized in that** the compounds comprise as additive from 0.1 to 10% by weight, based on the total weight of the polymeric moulding compounds, of a branched polymer which possesses a weight-average molecular weight of from 2000 to 200,000 and comprises

(a) a polymeric base molecule, and

(b) polydiorganosiloxane side chains which are bonded covalently to the base molecule via Si-C bonds, have a weight-average molecular weight of between 1000 and 30,000, and whose fraction of the total weight of the copolymer is from 5 to 25% by weight.

**3.** Coating compositions or polymeric moulding compounds according to Claim 1 or 2 **characterized in that** the polydiorganosiloxane side chains are attached to the base molecule by way of a structure selected from the following structures:

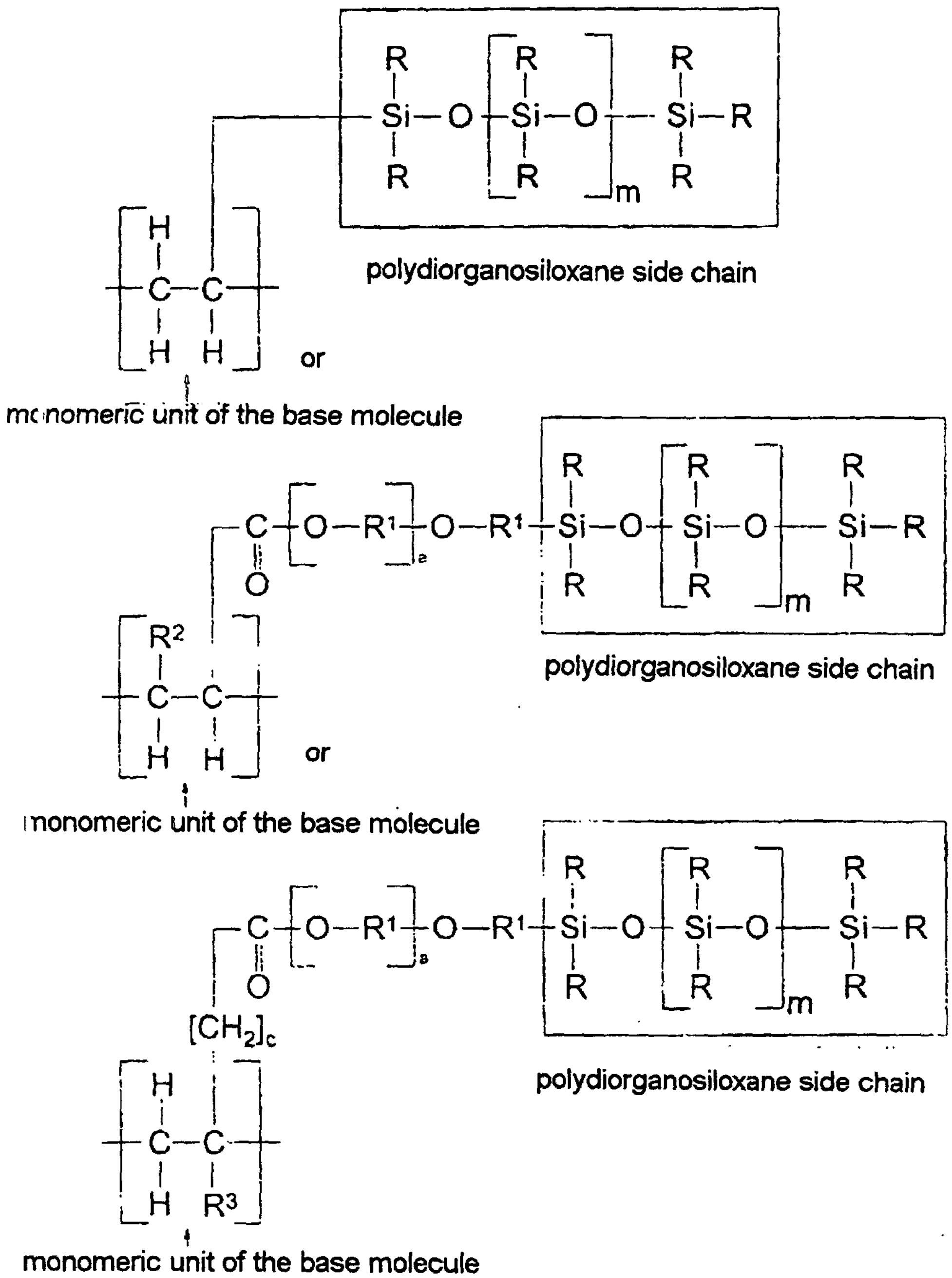


in which

the radicals R correspond to a straight-chain alkyl radical having from 1 to 8 carbon atoms or a perfluoroalkyl radical having from 3 to 10 carbon atoms, it being possible for the radicals R within a polydiorganosiloxane side chain to be identical or different,

the radicals $R^1$ correspond to a straight-chain or branched alkenyl radical having from 2 to 8 carbon atoms,

the radical $R^2$ corresponds to a hydrogen atom or to a radical -COOR' in which the radical R' is a hydrogen atom or a saturated or unsaturated, straight-chain, branched or cycloaliphatic alkyl radical having from 1 to 22 carbon atoms,

the radical $R^3$, if c is 1, corresponds to a radical -COOR' and, if c is 0, corresponds to a radical $-(CH_2)-COOR'$ or to a methyl group, the radical R' being as defined above,

the coefficient a may adopt a value from 0 to 10, and

m is chosen such that the molecular weight of the polydiorganosiloxane side chains is between 1000 and

30,000.

4. Coating compositions or polymeric moulding compounds according to one or more of Claims 1 to 3, **characterized in that** the polydiorganosiloxane side chains are attached in the form of a monoisocyanate adduct to the polymeric base molecule.

5. Ccating compositions or polymeric moulding compounds according to one or more of Claims 1 to 4, **characterized in that** the base molecule is a free-radical addition polymer, a polycondensate or a polyadduct.

6. Coating compositions or polymeric moulding compounds according to one or more of Claims 1 to 5, **characterized in that** the base molecule as a free-radical addition polymer is based on monomeric units selected from the group consisting of alkenes and arylalkenes having from 2 to 30 carbon atoms, alkyl acrylates and alkyl methacrylates of straight-chain, branched or cycloaliphatic alcohols having from 1 to 22 carbon atoms, aralkyl acrylates and aralkyl methacrylates of aralkyl alcohols having from 8 to 18 carbon atoms, polyethylene glycol monoacrylates or polyethylene glycol methacrylates having from 5 to 80 carbon atoms, hydroxyalkyl acrylates and hydroxyalkyl methacrylates of straight-chain, branched or cycloaliphatic diols having from 2 to 36 carbon atoms, epoxyalkyl acrylates and epoxyalkyl methacrylates of straight-chain, branched or cycloaliphatic hydroxy epoxides having from 3 to 6 carbon atoms, acrylamides and methacrylamides of straight-chain, branched or cycloaliphatic amines having from 1 to 22 carbon atoms, aminoalkyl acrylates and aminoalkyl methacrylates of straight-chain, branched or cycloaliphatic amino alcohols having from 2 to 8 carbon atoms, maleates, itaconates and fumarates of straight-chain, branched or cycloaliphatic alcohols having from 1 to 22 carbon atoms, perfluoroalkyl acrylates and perfluoroalkyl methacrylates having from 6 to 20 carbon atoms, vinyl esters, vinyl ethers and vinyl ketones having from 3 to 20 carbon atoms, vinyltrialkoxysilanes having from 5 to 8 carbon atoms, methacryloyloxypropyltrialkoxysilanes having from 10 to 16 carbon atoms, and also caprolactone- and/or valerolactone-modified hydroxyalkyl acrylates and caprolactone- and/or valerolactone-modified hydroxyalkyl methacrylates having an average molecular weight of from 220 to 1200, the hydroxyalkyl acrylates and the hydroxyalkyl methacrylates preferably being derived from straight-chain, branched or cycloaliphatic diols having from 2 to 8 carbon atoms.

7. Coating compositions or polymeric moulding compounds according to one or more of Claims 1 to 6, **characterized in that** the base molecule as a free-radical addition polymer is based on monomeric units selected from the group consisting of acrylic acid, methacrylic acid, methyl acrylate, methyl methacrylate, ethyl acrylate, ethyl methacrylate, n-butyl acrylate, n-butyl methacrylate, i-butyl acrylate, i-butyl methacrylate, t-butyl acrylate, t-butyl methacrylate, lauryl acrylate, lauryl methacrylate, 2-ethylhexyl acrylate, 2-ethylhexyl methacrylate, stearyl acrylate, stearyl methacrylate, behenyl acrylate, behenyl methacrylate, cyclohexyl acrylate, cyclohexyl methacrylate, isobornyl acrylate, isobornyl methacrylate, hydroxyethyl acrylate, hydroxyethyl methacrylate, glycidyloxypropyl acrylate, glycidyloxypropyl methacrylate, vinyltriethoxy-silane, methacryloyloxypropyltri-methoxysilane, isocyanatomethyl methacrylate, isopropenylcumyl isocyanate, styrene, $\alpha$-methylstyrene, acrylonitrile, triethylene glycol monoacrylate, triethylene glycol monomethacrylate, ethyl vinyl ether, butyl vinyl ether, cyclohexyl vinyl ether, vinyl acetate, N,N-dimethylaminoethyl acrylate, N,N-dimethylaminoethyl methacrylate, N,N-dimethyl-aminopropyl acrylate, N,N-dimethylaminopropyl methacrylate, polyethylene glycol monoacrylate, polyethylene glycol monomethacrylate, and caprolactone- and/or valerolactone-modified hydroxyethyl acrylate and caprolactone- and/or valerolactone-modified hydroxyethyl methacrylate having a molecular weight of between 220 and 1200.

8. Coating compositions or polymeric moulding compounds according to one or more of Claims 1 to 7, **characterized in that** the fraction of the polydiorganosiloxane side chains in the total weight of the branched polymer is from 5 to 20% by weight.

9. Coating compositions or polymeric moulding compounds according to one or more of Claims 1 to 8, **characterized in that** the fraction of the polydiorganosiloxane side chains in the total weight of the branched polymer is from 7.5 to 12.5% by weight.

10. Coating compositions or polymeric moulding compounds according to one or more of Claims 1 to 9, **characterized in that** functional hydroxyl groups present in the polymeric base molecule have been esterified with a compound selected from the group consisting of maleic anhydride, succinic anhydride, phthalic anhydride, trimellitic anhydride, acrylic acid and methacrylic acid.

11. Coating compositions or polymeric moulding compounds according to one or more of Claims 3 to 10, **characterized in that** the coefficient a may adopt a value from 0 to 5.

**12.** Coating compositions or polymeric moulding compounds according to one or more of Claims 1 to 11, **characterized in that** the branched polymer possesses a weight-average molecular weight of from 5000 to 75,000.

**13.** Coating compositions or polymeric moulding compounds according to one or more of Claims 1 to 12, **characterized in that** the branched polymer possesses a weight-average molecular weight of from 10,000 to 50,000.

**14.** Coating compositions according to one or more of Claims 1 to 13, **characterized in that** they contain the branched polymer additive in an amount of from 0.5 to 5% by weight, based on the solids content of the coating composition.

**15.** Coating compositions according to one or more of Claims 1 to 14, **characterized in that** they are coating compositions for producing anti-graffiti coatings, release coatings, self-cleaning façade coatings, ice-repelling coatings, car wheel coatings, dirt-repelling machine/instrument coatings, anti-fouling coatings for ships, and dirt-repelling furniture coatings and release paper coatings.

**16.** Polymeric moulding compounds according to one or more of Claims 1 to 15, **characterized in that** they contain the branched polymer additive in an amount of from 0.5 to 5% by weight, based on the total weight of the polymeric moulding compounds.

**17.** Polymeric moulding compounds according to one or more of Claims 1 to 16, **characterized in that** they comprise lacquer resins, alkyd resins, polyester resins, epoxy resins, polyurethane resins, unsaturated polyester resins, vinyl ester resins, polyethylene, polypropylene, polyamides, poly-ethylene terephthalate, PVC, polystyrene, polyacrylonitrile, polybutadiene, polyvinyl chloride or mixtures of these polymers.

**18.** Use of branched polymers which possess a weight-average molecular weight of from 2000 to 200,000 and comprise

(a) a polymeric base molecule, and

(b) polydiorganosiloxane side chains which are bonded covalently to the base molecule via Si-C bonds, have a weight-average molecular weight of between 1000 and 30,000, and whose fraction of the total weight of the copolymer is from 5 to 25% by weight

as additives for coating compositions or polymeric moulding compounds.

## Revendications

**1.** Moyen de revêtement ayant des propriétés anti-adhésives et anti-salissures, **caractérisé en ce qu'**il contient en tant qu'additif 0,1 à 10 % en poids, par rapport à l'extrait sec du moyen de revêtement, d'un polymère ramifié qui a une masse moléculaire moyenne en masse de 2000 à 200 000, et consiste en

a) une molécule de base polymère, et
b) des chaînes latérales polydiorganosiloxane, liées d'une manière covalente par l'intermédiaire de liaisons Si-C à la molécule de base, qui ont une masse moléculaire moyenne en masse située entre 1000 et 30 000, et dont la proportion par rapport au poids total du copolymère est de 5 à 25 %.

**2.** Mélanges à mouler polymères ayant des propriétés anti-adhésives et anti-salissures, **caractérisées en ce qu'**elles contiennent, en tant qu'additif, 0,1 à 10 % en poids, par rapport au poids total des mélanges à mouler polymères, d'un polymère ramifié qui a une masse moléculaire moyenne en masse de 2000 à 200 000, et consiste en

c) une molécule de base polymère, et
d) des chaînes latérales polydiorganosiloxane liées d'une manière covalente par l'intermédiaire de liaisons Si-C à la molécule de base, qui ont une masse moléculaire moyenne en masse située entre 1000 et 30 000, et dont la proportion par rapport au poids total du copolymère est de 5 à 25 % en poids.

**3.** Moyen de revêtement ou mélanges à mouler polymères selon la revendication 1 ou 2, **caractérisés en ce que** les chaînes latérales polydiorganosiloxane sont liées à la molécule de base par l'intermédiaire d'une structure choisie parmi les structures suivantes :

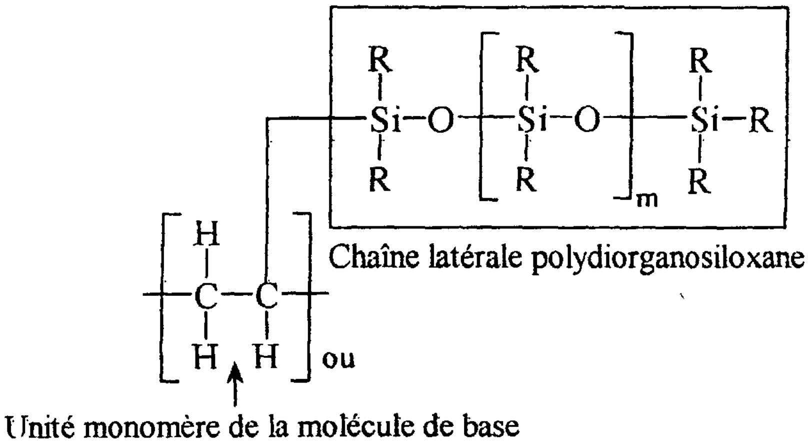


ou

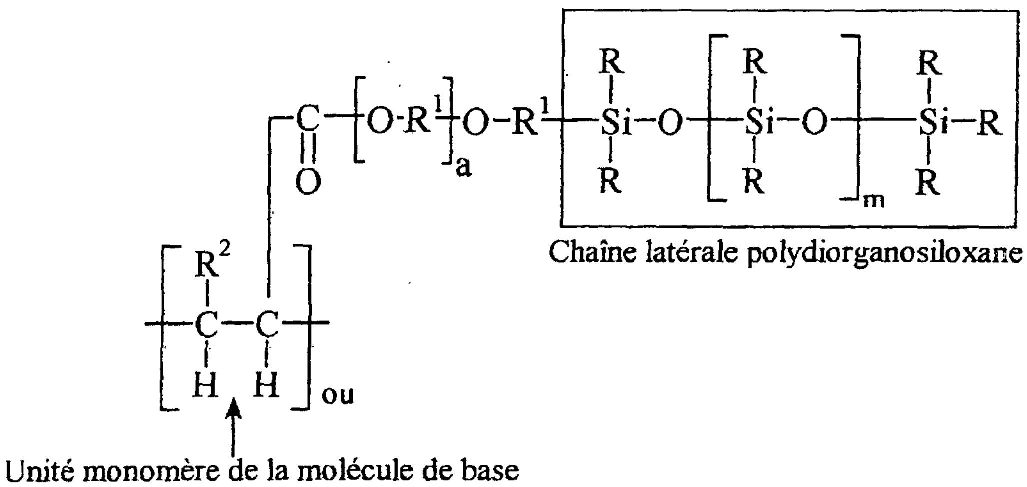


ou

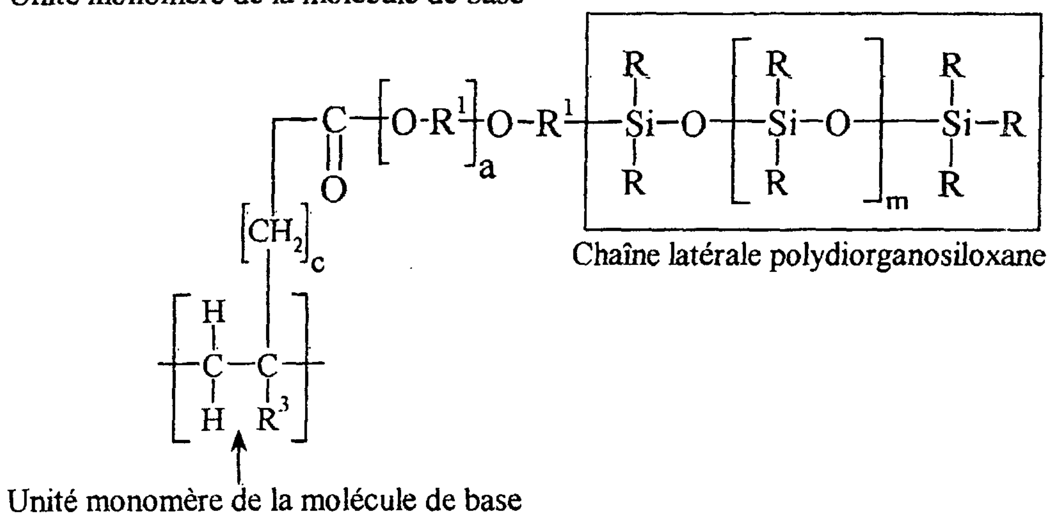


dans lesquelles

les restes R correspondent à un reste alkyle à chaîne droite ayant de 1 à 8 atomes de carbone ou un reste perfluoralkyle ayant de 3 à 10 atomes de carbone, les restes R, à l'intérieur d'une chaîne latérale polydiorganosiloxane, pouvant être identiques ou différents,

les restes $R^1$ correspondent à un reste alcényle à chaîne droite ou ramifiée ayant de 2 à 8 atomes de carbone,

le reste $R^2$ correspond à un atome d'hydrogène ou un reste -COOR', le reste R' étant un atome d'hydrogène

ou un reste alkyle, saturé ou insaturé, à chaîne droite ou ramifiée, ou cycloaliphatique, ayant 1 à 22 atomes de carbone,

le reste $R^3$ correspond à un reste -COOR' quand c vaut 1, et un reste $-(CH_2)$-COOR' ou un groupe méthyle quand c vaut 0, le reste R' étant tel que défini ci-dessus,

le coefficient a peut prendre une valeur de 0 à 10, et dans lesquelles

m est choisi de façon que la masse moléculaire des chaînes latérales polydiorganosiloxane soit comprise entre 1000 et 30 000.

**4.** Moyen de revêtement ou mélanges à mouler polymères selon une ou plusieurs des revendications 1 à 3, **caractérisés en ce que** les chaînes latérales polydiorganosiloxane sont sous forme d'un produit d'addition de monoisocyanate sur la molécule de base polymère.

**5.** Moyen de revêtement ou mélanges à mouler polymères selon une ou plusieurs des revendications 1 à 4, **caractérisés en ce que** la molécule de base est un polymère obtenu par polymérisation radicalaire, un produit de polycondensation ou un produit de polyaddition.

**6.** Moyen de revêtement ou mélanges à mouler polymères selon une ou plusieurs des revendications 1 à 5, **caractérisés en ce que** la molécule de base a la constitution d'un polymère obtenu par polymérisation radicalaire à partir d'unités monomères, qui sont choisies dans le groupe consistant en les alcènes et arylalcènes ayant de 2 à 30 atomes de carbone, les alkylacrylates et alkylméthacrylates d'alcools à chaîne droite ou ramifiée, ou cycloaliphatiques ayant de 1 à 22 atomes de carbone, les aralkylacrylates et aralkylméthacrylates d'alcools aralkyliques ayant de 8 à 18 atomes de carbone; les monoacrylates de polyéthylèneglycol ou méthacrylates de polyéthylèneglycol, ayant de 5 à 80 atomes de carbone, les hydroxyalkylacrylates et hydroxyalkylméthacrylates de diols à chaîne droite ou ramifiée, ou cycloaliphatiques, ayant de 2 à 36 atomes de carbone, les époxyalkylacrylates et époxyalkylméthacrylates d'hydroxyépoxydes à chaîne droite ou ramifiée, ou cycloaliphatiques, ayant de 3 à 6 atomes de carbone, les acrylamides et méthacrylamides d'amines à chaîne droite ou ramifiée, ou cycloaliphatiques, ayant de 1 à 22 atomes de carbone, les aminoalkylacrylates et aminoalkylméthacrylates d'amino- alcools à chaîne droite ou ramifiée, ou cycloaliphatiques, ayant de 2 à 8 atomes de carbone, esters de l'acide maléique, esters de l'acide itaconique et esters de l'acide fumarique, d'alcools à chaîne droite ou ramifiée, ou cycloaliphatiques, ayant de 1 à 22 atomes de carbone, les perfluoralkylacrylates et perfluoralkylméthacrylates ayant de 6 à 20 atomes de carbone, les esters vinyliques, vinyléthers et vinylcétones, ayant de 3 à 20 atomes de carbone, les vinyltrialcoxysilanes ayant de 5 à 8 atomes de carbone, les méthacryloxypropyltrialcoxysilanes ayant de 10 à 16 atomes de carbone, ainsi que les hydroxyalkylacrylates modifiés par la caprolactone et/ou la valérolactone et hydroxyalkylméthacrylates modifiés par la caprolactone et/ou la valérolactone, ayant une masse moléculaire moyenne de 220 à 1200, les hydroxyalkylacrylates et hydroxyalkylméthacrylates dérivant de préférence de diols à chaîne droite ou ramifiée, ou cycloaliphatiques, ayant de 2 à 8 atomes de carbone.

**7.** Moyen de revêtement ou mélanges à mouler polymères selon une ou plusieurs des revendications 1 à 6, **caractérisés en ce que** la molécule de base a la constitution d'un polymère obtenu par polymérisation radicalaire à partir d'unités monomères qui sont choisies dans le groupe consistant en l'acide acrylique, l'acide méthacrylique, l'acrylate de méthyle, le méthacrylate de méthyle, l'acrylate d'éthyle, le méthacrylate d'éthyle, l'acrylate de n-butyle, le méthacrylate de n-butyle, l'acrylate d'isobutyle, le méthacrylate d'isobutyle, l'acrylate de tert-butyle, le méthacrylate de tert-butyle, l'acrylate de lauryle, le méthacrylate de lauryle, l'acrylate de 2-éthylhexyle, le méthacrylate de 2-éthylhexyle, l'acrylate de stéaryle, le méthacrylate de stearyle, l'acrylate de béhényle, le méthacrylate de béhényle, l'acrylate de cyclohexyle, le méthacrylate de cyclohexyle, l'acrylate d'isobornyle, le méthacrylate d'isobornyle, l'acrylate d'hydroxyéthyle, le méthacrylate d'hydroxyéthyle, l'acrylate de glycidoxypropyle, le méthacrylate de glycidoxypropyle, le vinytriéthoxysilane, le méthacryloxypropyltriméthoxysilane, le méthacrylate d'isocyanatométhyle, l'isocyanate d'isopropénylcumyle, le styrène, l'$\alpha$-méthylstyrène, l'acrylonitrile, le monoacrylate de triéthylèneglycol, le monométhacrylate de triéthylèneglycol, l'éthylvinyléther, le butylvinyléther, le cyclohexylvinyléther, l'acétate de vinyle, l'acrylate de N,N-diméthylaminoéthyle, le méthacrylate de N,N-diméthylaminoéthyle, l'acrylate de N,N-diméthylaminopropyle, le méthacrylate de N,N-diméthylaminopropyle, le monoacrylate de polyéthylèneglycol, le monométhacrylate de polyéthylèneglycol, ainsi que l'acrylate d'hydroxyéthyle modifié par la caprolactone et/ou la valérolactone et le méthacrylate d'hydroxyéthyle modifié par la caprolactone et/ou la valérolactone, ayant une masse moléculaire comprise entre 220 et 1200.

**8.** Moyen de revêtement ou mélanges à mouler polymères selon une ou plusieurs des revendications 1 à 7, **caractérisés en ce que** la proportion des chaînes latérales polydiorganosiloxane, rapportée au poids total du polymère ramifié, est de 5 à 20 % en poids.

**9.** Moyen de revêtement ou mélanges à mouler polymères selon une ou plusieurs des revendications 1 à 8, **caractérisés en ce que** la proportion des chaînes latérales polydiorganosiloxane, rapportée au poids total du polymère ramifié, est de 7,5 à 12,5 % en poids.

**10.** Moyen de revêtement ou mélanges à mouler polymères selon une ou plusieurs des revendications 1 à 9, **caractérisés en ce que** des groupes hydroxyle fonctionnels présents dans la molécule de base polymère sont estérifiés avec un composé choisi dans le groupe consistant en l'anhydride maléique, l'anhydride succinique, l'anhydride phtalique, l'anhydride trimellitique, l'acide acrylique et l'acide méthacrylique.

**11.** Moyen de revêtement ou mélanges à mouler polymères selon une ou plusieurs des revendications 3 à 10, **caractérisés en ce que** le coefficient a peut prendre une valeur de 0 à 5.

**12.** Moyen de revêtement ou mélanges à mouler polymères selon une ou plusieurs des revendications 1 à 11, **caractérisés en ce que** le polymère ramifié a une masse moléculaire moyenne en masse de 5000 à 75 000.

**13.** Moyen de revêtement ou mélanges à mouler polymères selon une ou plusieurs des revendications 1 à 12, **caractérisés en ce que** le polymère ramifié a une masse moléculaire moyenne en masse de 10 000 à 50 000.

**14.** Moyen de revêtement selon une ou plusieurs des revendications 1 à 13, **caractérisé en ce qu'**il contient le polymère ramifié en tant qu'additif en une quantité de 0,5 à 5 % en poids par rapport à l'extrait sec du moyen de revêtement.

**15.** Moyen de revêtement selon une ou plusieurs des revendications 1 à 14, **caractérisé en ce qu'**il s'agit d'un moyen de revêtement pour préparer des revêtements anti-grafitti, des revêtements anti-adhésifs, des revêtements pour façade autonettoyants, des revêtements antigivre, des revêtements pour roues d'automobile, des revêtements pour machine/appareil anti-salissures, des revêtements anti-salissures marines pour les bateaux ainsi que des revêtements pour meubles et papiers anti-adhésifs anti-salissures.

**16.** Mélanges à mouler polymères selon une ou plusieurs des revendications 1 à 15, **caractérisés en ce qu'**il contiennent le polymère ramifié en tant qu'additif en une quantité de 0,5 à 5 % en poids par rapport au poids total des mélanges à mouler polymères.

**17.** Mélanges à mouler polymères selon une ou plusieurs des revendications 1 à 16, **caractérisés en ce qu'**il s'agit de résines pour peintures et vernis, de résines alkydes, de résines de polyester, de résines époxydes, de résines de polyuréthanne, de résines de polyester insaturé, de résines d'ester vinylique, de polyéthylène, de polypropylène, de polyamides, de polyéthylènetéréphtalate, de PVC, de polystyrène, de polyacrylonitrile, de polybutadiène, de poly(chlorure de vinyle) ou de mélanges de ces polymères.

**18.** Utilisation, en tant qu'additif pour moyen de revêtement ou mélanges à mouler polymères, de polymères ramifiés ayant une masse moléculaire moyenne en masse de 2000 à 200 000, et consistant en

e) une molécule de base polymère, et
f) des chaînes latérales polydiorganosiloxane, liées d'une manière covalente et par l'intermédiaire de liaisons Si-C à la molécule de base, qui ont une masse moléculaire moyenne en masse située entre 1000 et 30 000 et dont la proportion, rapportée au poids total du copolymère est de 5 à 25 % en poids.